# EUROPEAN PATENT SPECIFICATION

(11) **EP 2 919 608 B1**
(45) Date of publication and mention of the grant of the patent: **12.09.2018**
(21) Application number: 13815869.6
(22) Date of filing: 07.11.2013
(51) Int. Cl.: A43B 1/04, A43B 23/07, A43B 23/08, A43B 23/02

(54) **ARTICLE OF FOOTWEAR INCORPORATING A KNITTED COMPONENT WITH INTERIOR LAYER FEATURES**
SCHUHWERK MIT EINEM STRICKTEIL MIT INNENLAGENMERKMALEN
ARTICLE DE CHAUSSURE COMPRENANT UN ÉLÉMENT TRICOTÉ AYANT DES CARACTÉRISTIQUES DE COUCHE INTÉRIEURE

(30) Priority: 15.11.2012 US 201261727010 P; 29.08.2013 US 201314013402
(43) Date of publication of application: 23.09.2015
(73) Proprietor: NIKE Innovate C.V., Beaverton, OR 97005-6453 (US)
(72) Inventor: FAHMI, Windra, Beaverton, OR 97005-6453 (US); SEAMARKS, Karl, Beaverton, OR 97005-6453 (US)
(74) Representative: Prinz & Partner mbB
(86) International application number: PCT/US2013/068830
(87) International publication number: WO 2014/078152

(56) References cited:
- EP-A1- 2 649 898
- US-A1- 2005 016 023
- US-A1- 2010 154 256

## Description

### BACKGROUND

Conventional articles of footwear generally include two primary elements, an upper and a sole structure. The upper is secured to the sole structure and forms a void on the interior of the footwear for comfortably and securely receiving a foot. The sole structure is secured to a lower surface of the upper so as to be positioned between the upper and the ground. In some articles of athletic footwear, for example, the sole structure may include a midsole and an outsole. The midsole may be formed from a polymer foam material that attenuates ground reaction forces to lessen stresses upon the foot and leg during walking, running, and other ambulatory activities. The outsole is secured to a lower surface of the midsole and forms a ground-engaging portion of the sole structure that is formed from a durable and wear-resistant material. The sole structure may also include a sockliner positioned within the void and proximal a lower surface of the foot to enhance footwear comfort.

The upper generally extends over the instep and toe areas of the foot, along the medial and lateral sides of the foot, and around the heel area of the foot. In some articles of footwear, such as basketball footwear and boots, the upper may extend upward and around the ankle to provide support or protection
for the ankle. Access to the void on the interior of the upper is generally provided by an ankle opening in a heel region of the footwear. A lacing system is often incorporated into the upper to adjust the fit of the upper, thereby permitting entry and removal of the foot from the void within the upper. The lacing system also permits the wearer to modify certain dimensions of the upper, particularly girth, to accommodate feet with varying dimensions. In addition, the upper may include a tongue that extends under the lacing system to enhance adjustability of the footwear, and the upper may incorporate a heel counter to limit movement of the heel.

Various materials are conventionally utilized in manufacturing the upper. The upper of athletic footwear, for example, may be formed from multiple material elements. The materials may be selected based upon various properties, including stretch-resistance, wear-resistance, flexibility, air-permeability, compressibility, and moisture-wicking, for example. With regard to an exterior of the upper, the toe area and the heel area may be formed of leather, synthetic leather, or a rubber material to impart a relatively high degree of wear-resistance. Leather, synthetic leather, and rubber materials may not exhibit the desired degree of flexibility and air-permeability for various other areas of the exterior. Accordingly, the other areas of the exterior may be formed from a synthetic textile, for example. The exterior of the upper may be formed, therefore, from numerous material elements that each impart different properties to the upper. An intermediate or central layer of the upper may be formed from a lightweight polymer foam material that provides cushioning and enhances comfort. Similarly, an interior of the upper may be formed of a comfortable and moisture-wicking textile that removes perspiration from the area immediately surrounding the foot. The various material elements and other components may be joined with an adhesive or stitching. Accordingly, the conventional upper is formed from various material elements that each impart different properties to various areas of the footwear.

US 2005/016023 A1 discloses an article of footwear having an upper and a sole structure secured to the upper. At least a portion of the upper includes a substrate layer and a polymer layer. The substrate layer is formed of an air-permeable material, and may be a textile or mesh material. The polymer layer defines a plurality of apertures that expose portions of the substrate layer, and the polymer layer is formed of a polymer material that infiltrates the substrate layer and is thereby secured to the substrate layer. A method of forming the material for the upper includes casting a polymer resin to form the polymer layer.

### SUMMARY

The invention provides an article of footwear comprising the features of claim 1. Preferred embodiments are defined in the dependent claims. To gain an improved understanding of the advantages and features of novelty, however, reference may be made to the following descriptive matter and accompanying figures that describe and illustrate various configurations and concepts related to the invention.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
Figure 1 is a lateral side elevational view of a first configuration of an article of footwear.
Figure 2 is a medial side elevational view of the first configuration of the article of footwear.
Figure 3 is a top plan view of the first configuration of the article of footwear.
Figures 4A-4C are cross-sectional views of the first configuration of the article of footwear, as respectively defined by section lines 4A-4C in Figure 3.
Figure 5 is a top plan view of a knitted component and a skin layer from an upper of the first configuration of the article of footwear.
Figure 6 is an exploded top plan view of the knitted component and the skin layer.
Figures 7A-7C are cross-sectional views of the knitted component and the skin layer, as respectively defined by section lines 7A-7C in Figure 5.
Figures 8A and 8B are perspective views of an exemplary portion of the knitted component and the skin layer.
Figures 9A-9C are top plan views depicting further configurations of the knitted component.
Figures 10A-10D are perspective views of a process for utilizing a press to bond the knitted component and the skin layer.
Figures 11A-11D are cross-sectional views of the process for utilizing the press, as respectively defined by section lines 11A-11D in Figures 10A-10D.
Figure 12 is a lateral side elevational view of a second configuration of the article of footwear.
Figure 13 is a medial side elevational view of the second configuration of the article of footwear.
Figure 14 is a top plan view of the second configuration of the article of footwear.
Figure 15 is a cross-sectional view of the second configuration of the article of footwear, as defined by section line 15 in Figure 14.
Figure 16 is a top plan view of a third configuration of the article of footwear.
Figure 17 is a cross-sectional view of the third configuration of the article of footwear, as defined by section line 17 in Figure 16.
Figure 18 is a top plan view of a tongue from the third configuration of the article of footwear.
Figure 19 is a cross-sectional view of the tongue, as defined by section line 19 in Figure 18.
Figures 20 and 21 are top plan views of further configurations of the knitted component and a lace.
Figure 22 is a cross-sectional view, as defined by section line 22 in Figure 21.
Figures 23A and 23B are top plan views corresponding with Figure 5 and depicting further configurations for the skin layer from an upper of the first configuration of the article of footwear.
Figure 24 is a bottom plan view of a configuration of the knitted component that includes an interior layer.
Figure 25 is a cross-sectional view of the article of footwear corresponding with Figure 4A and depicting the interior layer.
Figure 26 is an exploded isometric view of a first configuration of an asymmetric interior layer for a knitted component.
Figure 27 is a bottom plan view of the first configuration of an asymmetric interior layer with a knitted component shown in phantom.
Figure 28 is an exploded isometric view of components of the first configuration of an asymmetric interior layer.
Figure 29 is a top plan view of an article of footwear incorporating the first configuration of an asymmetric interior layer.
Figures 30A and 30B are cross-sectional views of the article of footwear, corresponding to section lines 30A and 30B in Figure 29.
Figure 31 is an exploded isometric view of a second configuration of an asymmetric interior layer for a knitted component.
Figure 32 is a bottom plan view of the second configuration of an asymmetric interior layer with a knitted component shown in phantom.
Figure 33 is an exploded isometric view of components of the second configuration of an asymmetric interior layer.
Figure 34 is a top plan view of an article of footwear incorporating the second configuration of an asymmetric interior layer.
Figures 35A through 35C are cross-sectional views of the article of footwear, corresponding to section lines 35A, 35B, and 35C in Figure 34.
Figure 36 is an exploded lateral side view of an article of footwear incorporating an exemplary embodiment of a heel pad.
Figure 37 is a lateral side view of the exemplary embodiment of a heel pad with the article of footwear shown in phantom.
Figure 38 is a longitudinal cross-section representational view of the article of footwear incorporating the exemplary embodiment of a heel pad with a foot of a wearer disposed within.
Figure 39 is an exploded interior view of components of the exemplary embodiment of a heel pad.
Figure 40 is an exploded lateral side view of an article of footwear incorporating an alternate embodiment of a heel pad.
Figure 41 is a lateral side view of the alternate embodiment of a heel pad with the article of footwear shown in phantom.
Figure 42 is a longitudinal cross-section representational view of the article of footwear incorporating the alternate embodiment of a heel pad with a foot of a wearer disposed within.
Figure 43 is an exploded interior view of components of the alternate embodiment of a heel pad.

### DETAILED DESCRIPTION

The following discussion and accompanying figures disclose an article of footwear having an upper that includes a knitted component and a skin layer. The article of footwear is disclosed as having a general configuration suitable for walking or running. Concepts associated with the footwear, including the upper, may also be applied to a variety of other athletic footwear types, including baseball shoes, basketball shoes, cross-training shoes, cycling shoes, football shoes, soccer shoes, sprinting shoes, tennis shoes, and hiking boots, for example. The concepts may also be applied to footwear types that are generally considered to be non-athletic, including dress shoes, loafers, sandals, and work boots. The concepts disclosed herein apply, therefore, to a wide variety of footwear types.

### General Footwear Structure

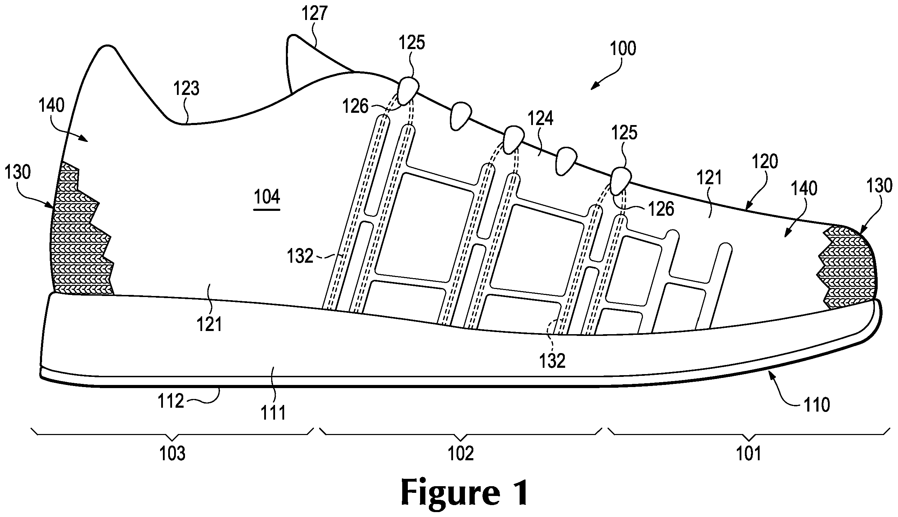

An article of footwear 100 is depicted in Figures 1-4C as including a sole structure 110 and an upper 120. Whereas sole structure 110 is located under and supports a foot of a wearer, upper 120 provides a comfortable and secure covering for the foot. As such, the foot may be located within a void in upper 120 to effectively secure the foot within footwear 100 or otherwise unite the foot and footwear 100. Moreover, sole structure 110 is secured to a lower area of upper 120 and extends between the foot and the ground to attenuate ground reaction forces (i.e., cushion the foot), provide traction, enhance stability, and influence the motions of the foot, for example.

For reference purposes, footwear 100 may be divided into three general regions: a forefoot region 101, a midfoot region 102, and a heel region 103. Forefoot region 101 generally encompasses portions of footwear 100 corresponding with forward portions of the foot, including the toes and joints connecting the metatarsals with the phalanges. Midfoot region 102 generally encompasses portions of footwear 100 corresponding with middle portions of the foot, including an arch area. Heel region 103 generally encompasses portions of footwear 100 corresponding with rear portions of the foot, including the heel and calcaneus bone. Footwear 100 also includes a lateral side 104 and a medial side 105, which extend through each of regions 101-103 and correspond with opposite sides of footwear 100. More particularly, lateral side 104 corresponds with an outside area of the foot (i.e. the surface that faces away from the other foot), and medial side 105 corresponds with an inside area of the foot (i.e., the surface that faces toward the other foot). Regions 101-103 and sides 104-105 are not intended to demarcate precise areas of footwear 100. Rather, regions 101-103 and sides 104-105 are intended to represent general areas of footwear 100 to aid in the following discussion. In addition to footwear 100, regions 101-103 and sides 104-105 may also be applied to sole structure 110, upper 120, and individual elements thereof.

The primary elements of sole structure 110 are a midsole 111, an outsole 112, and a sockliner 113. Midsole 111 is secured to a lower surface of upper 120 and may be formed from a compressible polymer foam element (e.g., a polyurethane or ethylvinylacetate foam) that attenuates ground reaction forces (i.e., provides cushioning) when compressed between the foot and the ground during walking, running, or other ambulatory activities. In further configurations, midsole 111 may incorporate plates, moderators, fluid-filled chambers, lasting elements, or motion control members that further attenuate forces, enhance stability, or influence the motions of the foot, or midsole 21 may be primarily formed from a fluid-filled chamber. Outsole 112 is secured to a lower surface of midsole 111 and may be formed from a wear-resistant rubber material that is textured to impart traction. Sockliner 113 is located within the void in upper 120 and is positioned to extend under a lower surface of the foot to enhance the comfort of footwear 100. Although this configuration for sole structure 110 provides an example of a sole structure that may be used in connection with upper 120, a variety of other conventional or nonconventional configurations for sole structure 110 may also be utilized. Accordingly, the features of sole structure 110 or any sole structure utilized with upper 120 may vary considerably.

Upper 120 includes an exterior surface 121 and an opposite interior surface 122. Whereas exterior surface 121 faces outward and away from footwear 100, interior surface 122 faces inward and defines a majority or a relatively large portion of the void within footwear 100 for receiving the foot. The void is shaped to accommodate the foot. When the foot is located within the void, therefore, upper 120 extends along a lateral side of the foot, along a medial side of the foot, over the foot, around the heel, and under the foot. Moreover, interior surface 122 may lay against the foot or a sock covering the foot. Upper 120 also includes a collar 123 that is primarily located in heel region 103 and forms an opening that provides the foot with access to the void. More particularly, the foot may be inserted into upper 120 through the opening formed by collar 123, and the foot may be withdrawn from upper 120 through the opening formed by collar 123.

A throat area 124 of upper 120 is located forward of collar 123 and primarily in midfoot region 102. Although the extent of throat area 124 may vary, throat area 124 corresponds with an instep region or upper surface of the foot and includes a lace 125, a plurality of lace-receiving elements 126, and a tongue 127. Lace 125 engages the various lace-receiving elements 126 and follows a zigzagging path between lace-receiving elements 126. Moreover, lace 125 repeatedly-passes across throat area 124 and between opposite sides of throat area 124. When using footwear 100, lace 125 permits the wearer to modify dimensions of upper 120 to accommodate the proportions of the foot. More particularly, lace 125 may be manipulated in a conventional manner to permit the wearer to (a) tighten upper 120 around the foot and (b) loosen upper 120 to facilitate insertion and withdrawal of the foot from the void in upper 120 (i.e., through the opening formed by collar 123). Although lace-receiving elements 126 are depicted as apertures in upper 120, and with lace 125 passing through the apertures, lace-receiving elements 126 may be loops, eyelets, hooks, or D-rings.

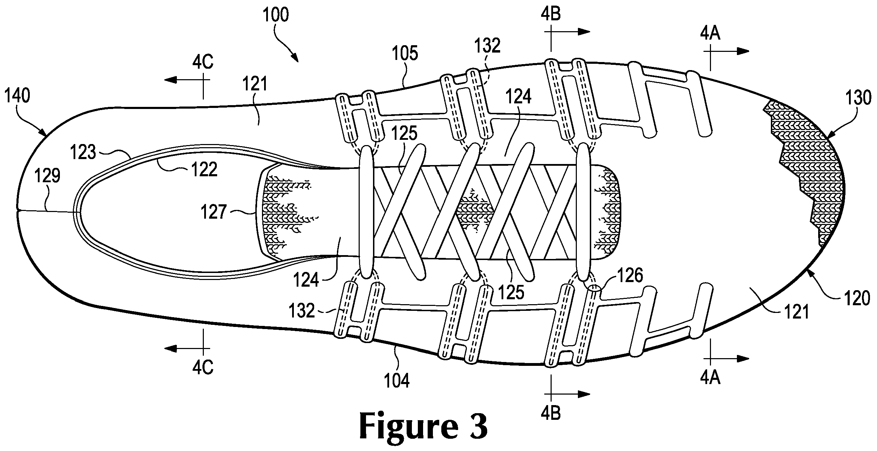

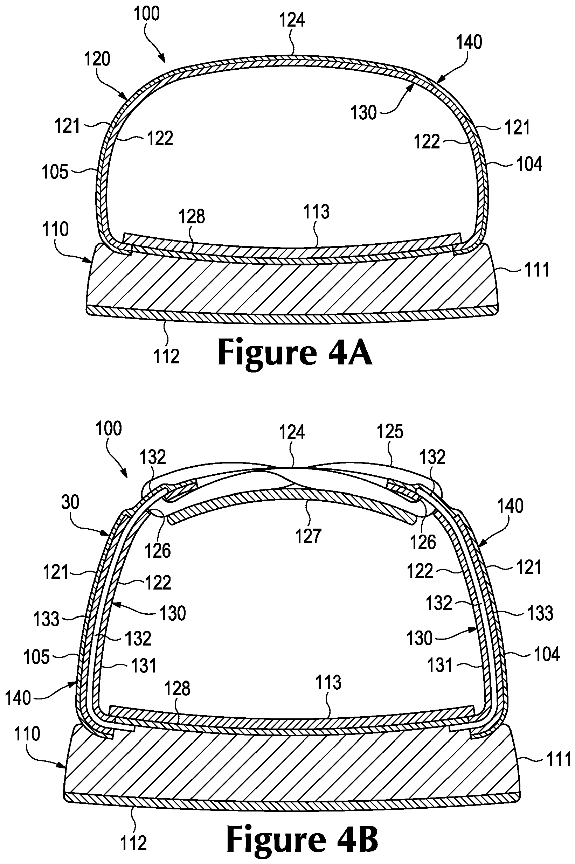

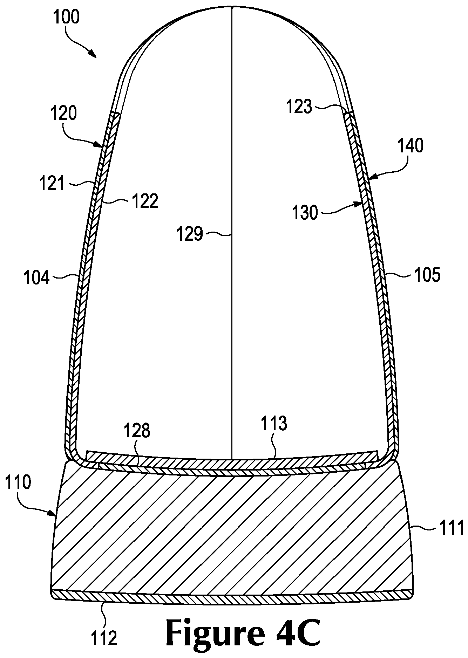

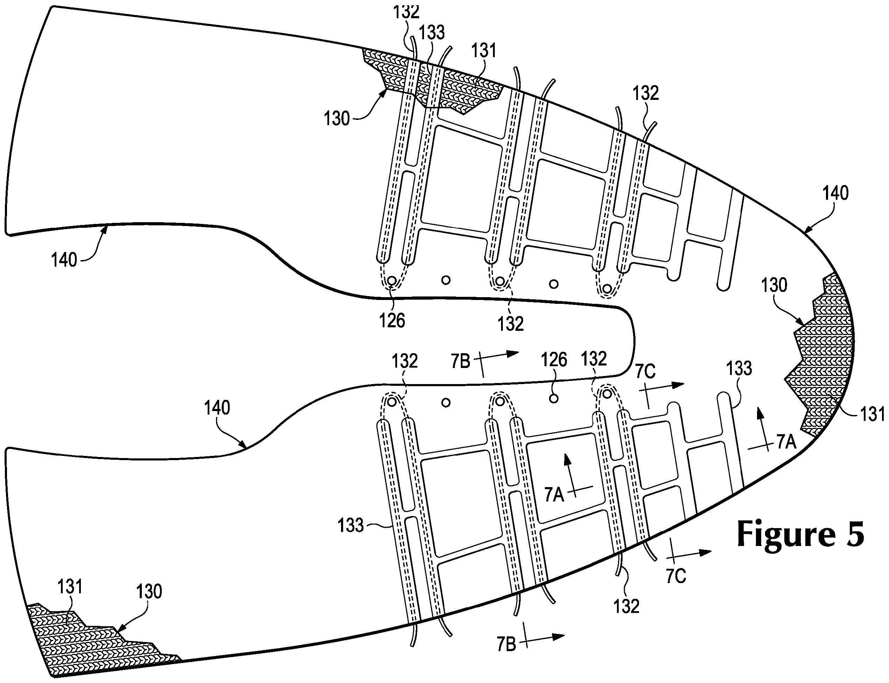

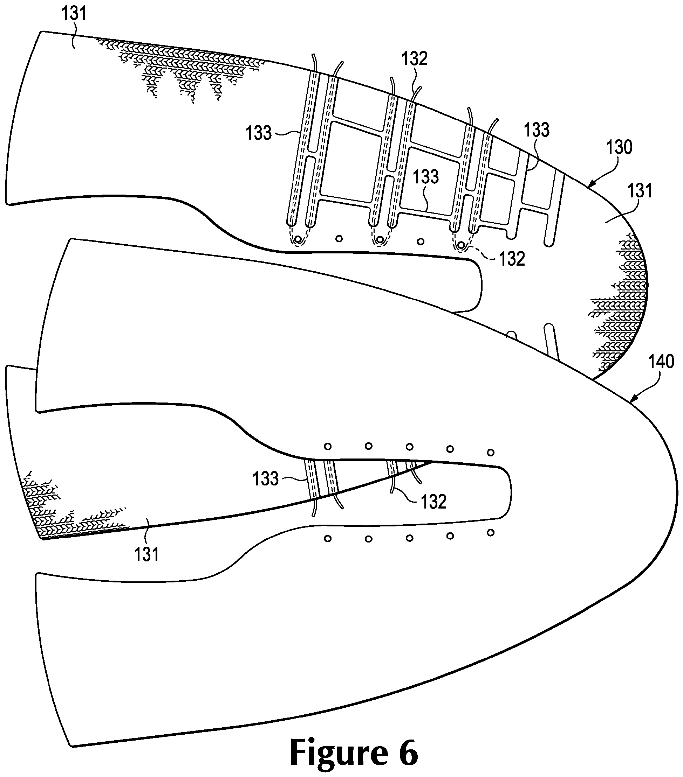

A majority of upper 120 is formed from a knitted component 130 and a skin layer 140, which are depicted separate from a remainder of footwear 100 in Figures 5 and 6. Knitted component 130 may, for example, be manufactured through a flat knitting process and extends through each of regions 101-103, along both lateral side 104 and medial side 105, over forefoot region 101, and around heel region 103. Although portions of knitted component 130 form exterior surface 121, knitted component 130 forms a majority or a relatively large portion of interior surface 122, thereby defining a portion of the void within upper 120. In some configurations, knitted component 130 may also extend under the foot. For purposes of example in various figures, however, a strobel sock 128 is secured to knitted component 130 and forms a majority of the portion of upper 120 that extends under the foot. In this configuration, sockliner 113 extends over strobel sock 128 and forms a surface upon which the foot rests. In addition, a seam 129 extends vertically through heel region 103, as depicted in Figures 3 and 4C, to join edges of knitted component 130.

Skin layer 140 lays adjacent to knitted component 130 and is secured to an exterior of knitted component 130, thereby forming a majority or a relatively large portion of exterior surface 121. Various materials may be utilized to form skin layer 140, including a polymer sheet, elements of leather or synthetic leather, a woven or non-woven textile, or a metal foil. As with knitted component 130, skin layer 140 extends through each of regions 101-103, along both lateral side 104 and medial side 105, over forefoot region 101, and around heel region 103. Skin layer 140 is depicted as being absent from portions of throat area 124 (e.g., tongue 127) and interior surface 122. In further configurations of footwear 100, skin layer 140 may be absent from other areas of upper 120 or may extend over portions of throat area 124 and into interior surface 122.

The combination of knitted component 130 and skin layer 140 provides various advantages to footwear 100. As an example, knitted component 130 and skin layer 140 impart a relatively tight and glove-like fit to upper 120 that secures the foot within footwear 100 during walking, running, and other ambulatory activities. When formed as a soccer shoe, for example, the relatively tight and glove-like fit may provide the wearer with enhanced feel and control of a ball. Skin layer 140 may also be utilized to reinforce areas of upper 120. For example, skin layer 140 may inhibit stretch in knitted component 130 and may enhance the wear-resistance or abrasion-resistance of upper 120. Skin layer 140 may also impart water-resistance to footwear 100. Additionally, forming footwear 100 in this configuration may provide a relatively light weight or mass, support for the foot, uniform fit and conformance to a shape of the foot, and a relatively seamless interior with enhanced comfort for the wearer.

The discussion above presents various features and elements of upper 120. In further configurations of footwear 100, however, upper 120 may also include one or more of (a) a heel counter in heel region 103 for enhancing stability, (b) a toe guard in forefoot region 101 that is formed of a wear-resistant material, and (c) logos, trademarks, and placards with care instructions and material information. Accordingly, upper 120 may incorporate a variety of other features and elements, in addition to the features and elements discussed herein and shown in the figures.

### Knitted Component Configuration

Knitted component 130 extends throughout upper 120 and forms a majority of interior surface 122, thereby defining a portion of the void within upper 120. Although seams may be present in knitted component 130, a majority of knitted component 130 has a substantially seamless configuration. Moreover, knitted component 130 may be formed of unitary knit construction. As utilized herein, a knitted component (e.g., knitted component 130) is defined as being formed of "unitary knit construction" when formed as a one-piece element through a knitting process. That is, the knitting process substantially forms the various features and structures of knitted component 130 without the need for significant additional manufacturing steps or processes. Although portions of knitted component 130 may be joined to each other (e.g., edges of knitted component 130 being joined together, as at seam 129) following the knitting process, knitted component 130 remains formed of unitary knit construction because it is formed as a one-piece knit element. Moreover, knitted component 130 remains formed of unitary knit construction when other elements (e.g., lace 125, strobel sock 127 logos, trademarks, placards) are added following the knitting process. Examples of various configurations of knitted components that may be utilized for knitted component 130 are disclosed in U.S. Patent Number 6,931,762 to Dua; U.S. Patent Number 7,347,011 to Dua, et al.; U.S. Patent Application Publication 2008/0110048 to Dua, et al.; U.S. Patent Application Publication 2010/0154256 to Dua; and U.S. Patent Application Publication 20120233882 to Huffa, et al..

The primary elements of knitted component 130 are a knit element 131 and an inlaid strand 132. Knit element 131 is formed from at least one yarn that is manipulated (e.g., with a knitting machine) to form a plurality of intermeshed loops that define a variety of courses and wales. That is, knit element 131 has the structure of a knit textile. Inlaid strand 132 extends through knit element 131 and passes between the various loops within knit element 131. Although inlaid strand 132 generally extends along courses within knit element 131, inlaid strand 132 may also extend along wales within knit element 131. Advantages of inlaid strand 132 include providing support, stability, and structure. For example, inlaid strand 132 assists with securing upper 120 around the foot, limits deformation in areas of upper 120 (e.g., imparts stretch-resistance), and operates in connection with lace 125 to enhance the fit of footwear 100. U.S. Patent Application Publication 20120233882 to Huffa, et al., provides discussion of the manner in which knitted component 130 may be formed, including the process of inlaying or otherwise locating inlaid strand 132 within knit element 131.

Knit element 131 may incorporate various types and combinations of stitches and yarns. With regard to stitches, the yarn forming knit element 131 may have one type of stitch in one area of knit element 131 and another type of stitch in another area of knit element 131. Depending upon the types and combinations of stitches utilized, areas of knit element 131 may have a plain knit structure, a mesh knit structure, or a rib knit structure, for example. The different types of stitches may affect the physical properties of knit element 131, including aesthetics, stretch, thickness, air permeability, and abrasion-resistance of knit element 131. That is, the different types of stitches may impart different properties to different areas of knitted component 130. With regard to yarns, knit element 131 may have one type of yarn in one area of knit element 131 and another type of yarn in another area of knit element 131. Depending upon various design criteria, knit element 131 may incorporate yarns with different deniers, materials (e.g., cotton, elastane, polyester, rayon, wool, and nylon), and degrees of twist, for example. The different types of yarns may affect the physical properties of knit element 131, including aesthetics, stretch, thickness, air permeability, and abrasion-resistance of knit element 131. That is, the different types of yarns may impart different properties to different areas of knitted component 130. By combining various types and combinations of stitches and yarns, each area of knit element 131 may have specific properties that enhance the comfort, durability, and performance of footwear 100. In some configurations, multiple yarns with different colors may be utilized to form knitted component 130. When yarns with different colors are twisted together and then knitted, knitted component 130 may have a heathered appearance with multiple colors randomly distributed throughout upper 120.

One or more of the yarns within knit element 131 may be partially formed from a thermoplastic polymer material, which softens or melts when heated and returns to a solid state when cooled. More particularly, the thermoplastic polymer material transitions from a solid state to a softened or liquid state when subjected to sufficient heat, and then the thermoplastic polymer material transitions from the softened or liquid state to the solid state when sufficiently cooled. As such, thermoplastic polymer materials are often used to join two objects or elements together. In this case, a yarn incorporating thermoplastic polymer material may be utilized to join (a) the yarn to other portions of the yarn, (b) the yarn to other yarns, (c) the yarn to inlaid strand 132, or (d) knitted component 130 to skin layer 140, for example.

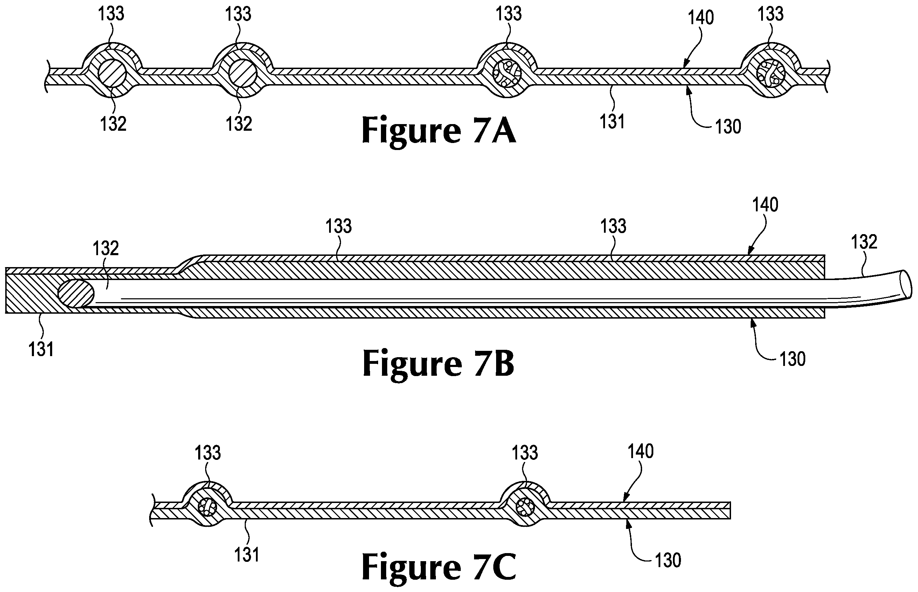

Inlaid strand 132, as noted above, extends through knit element 131 and passes between the various loops within knit element 131. More particularly, inlaid strand 132 is located within the knit structure of knit element 131. Referring to Figures 7A and 7B, for example, knit element 131 forms two separate and spaced textile layers, which effectively define a channel or tubular structure, and inlaid strand 132 is located between the spaced textile layers. In some configurations, however, knit element 131 may have the configuration of a single textile layer in the area of inlaid strand 132. In either configuration, inlaid strand 132 is located within knit element 131 and between opposite surfaces of knit element 131. Although inlaid strand 132 is primarily within knit element 131, portions of inlaid strand 132 may be visible or exposed on one or both surfaces of knit element 131.

When knitted component 130 is incorporated into footwear 100, inlaid strand 132 extends in a generally vertical direction and from throat area 124 to an area where sole structure 110 is secured to upper 120. More particularly, inlaid strand repeatedly passes through knit element 131 from throat area 124 to an area adjacent to sole structure 110. In throat area 124, inlaid strand may also extend around lace-receiving elements 126, there by forming loops through which lace 125 passes. In comparison with knit element 131, inlaid strand 132 may exhibit greater stretch-resistance. That is, inlaid strand 132 may stretch less than knit element 131. Given that numerous sections of inlaid strand 132 extend toward sole structure 110 from throat area 124, inlaid strand 132 imparts stretch-resistance to this area of upper 120. Moreover, placing tension upon lace 125 may impart tension to inlaid strand 132, thereby inducing the portion of upper 120 between throat area 124 and sole structure 110 to lay against the foot. As such, inlaid strand 132 operates in connection with lace 125 to assist with securing upper 120 around the foot and enhance the fit of footwear 100.

The configuration of inlaid strand 132 may vary significantly. In addition to yarn, inlaid strand 132 may have the configurations of a filament (e.g., a monofilament), thread, rope, webbing, cable, or chain, for example. In comparison with the yarns forming knit element 131, the thickness of inlaid strand 132 may be greater. In some configurations, inlaid strand 132 may have a significantly greater thickness than the yarns of knit element 131. Moreover, the materials forming inlaid strand 132 may include any of the materials for the yarn within knit element 131, such as cotton, elastane, polyester, rayon, wool, and nylon, but may also include metals and a variety of engineering filaments that are utilized for high tensile strength applications, including glass, aramids (e.g., para-aramid and meta-aramid), ultra-high molecular weight polyethylene, and liquid crystal polymer. As another example, a braided polyester thread may also be utilized as inlaid strand 132.

The combination of knitted component 130 and skin layer 140 provide various advantages to footwear 100. In some configurations, however, skin layer 140 may be absent from footwear 100. That is, knitted component 130 may be utilized individually to form portions of upper 120, and knitted component 130 may form a majority of relatively large portion of each of surfaces 121 and 122. Moreover, the presence of protruding areas 133 when skin layer 140 is absent may impart additional thickness or loft to upper 120, while also varying the stretch properties of upper 120. Although discussed in combination with skin layer 140, therefore, knitted component 130 may be utilized individually.

### Skin Layer Configuration

Skin layer 140 lays adjacent to knitted component 130 and is secured to knitted component 130 to form a portion of exterior surface 121. As noted above, skin layer 140 may be formed from a polymer sheet, elements of leather or synthetic leather, a woven or non-woven textile, or a metal foil. When formed as a polymer sheet or polymer layer, skin layer 140 may initially be a polymer film, polymer mesh, polymer powder, or polymer resin, for example. With any of these structures, a variety of polymer materials may be utilized for skin layer 140, including polyurethane, polyester, polyester polyurethane, polyether polyurethane, and nylon. An example of a non-woven textile with thermoplastic polymer filaments that may be bonded to knitted component 130 is disclosed in U.S. Patent Application Publication 2010/0199406 to Dua, et al.. Moreover, additional considerations relating to skin layer 140 may be found in U.S. Patent Application Publication 2012/0246973 to Dua.

Although skin layer 140 may be formed from a thermoset polymer material, many configurations of skin layer 140 are formed from thermoplastic polymer materials (e.g., thermoplastic polyurethane). In general, a thermoplastic polymer material softens or melts when heated and returns to a solid state when cooled. More particularly, the thermoplastic polymer material transitions from a solid state to a softened or liquid state when subjected to sufficient heat, and then the thermoplastic polymer material transitions from the softened or liquid state to the solid state when sufficiently cooled. As such, the thermoplastic polymer material may be melted, molded, cooled, re-melted, re-molded, and cooled again through multiple cycles. Thermoplastic polymer materials may also be welded or thermal bonded to textile elements, such as knitted component 130.

In many configurations of footwear 100, a single element of skin layer 140 is secured throughout knitted component 130 and covers substantially all of knitted component 130. In further configurations, however, different elements of skin layer 140 may be formed from different materials and positioned in separate areas of knitted component 130. That is, a portion of skin layer 140 formed from one material may be bonded to one area of knitted component 130, and another portion of skin layer 140 formed from another material may be bonded to a different area of knitted component 130. By varying the materials forming skin layer 140, different properties may be applied to different areas of upper 120. In other configurations, skin layer 140 may only cover specific areas of knitted component 130, thereby leaving other areas of knitted component 130 exposed. Skin layer 140 may, therefore, be absent from some areas of knitted component 130.

Skin layer 140 is discussed above as being positioned on an exterior of knitted component 130. In some configurations, however, skin layer 140 may be bonded with an opposite surface of knitted component 130, thereby forming a portion of interior surface 122. In other configurations, two skin layers 140 may be bonded to opposite surfaces of knitted component 130, or skin layer 140 may impregnate or otherwise extend into knitted component 130.

### Protruding Areas

Knitted component 130 includes a plurality of protruding areas 133 that extend outward and away from the void within upper 120. Protruding areas 133 form bulges, protrusions, bumps, or other outwardly-extending portions in knitted component 130. As with inlaid strand 132, many of protruding areas 133 extend in a generally vertical direction and from throat area 124 to the area where sole structure 110 is secured to upper 120. Some of protruding areas 133 correspond with and incorporate inlaid strand 132. In addition, some of protruding areas 133 extend in a generally horizontal direction and between two other protruding areas 133. That is, the horizontal protruding areas 133 extend between and effectively join with two of the vertical protruding areas 133. In addition to providing a unique aesthetic to footwear 100, protruding areas 133 may enhance the strength of upper 120 or impart a variety of different properties to upper 120.

Skin layer 140 extends over protruding areas 133 and may be secured to protruding areas 133, as well as other areas of knitted component 130. As such, skin layer 140 forms corresponding bulges, protrusions, bumps, or other outwardly-extending portions at the locations of protruding areas 133 and on exterior surface 121, as depicted in Figures 7A and 7C, for example. An advantage of this configuration is that the friction properties of footwear 100 may be controlled through the specific pattern that protruding areas 133 form in upper 120. As an example, the combination of protruding areas 133 and skin layer 140 may provide enhanced control of a ball during the sport of soccer. That is, a soccer player may obtain enhanced control of a soccer ball through the raised or outwardly-extending portions of upper 120 that are formed by protruding areas 133.

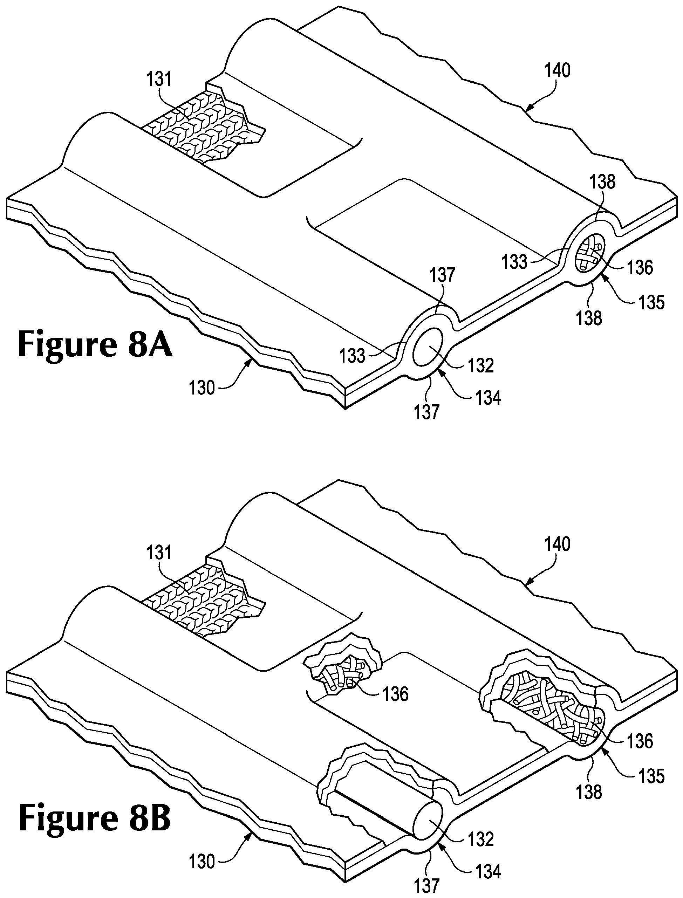

Protruding areas 133 may be formed to have various configurations. That is, multiple knit structures and knitting techniques may be utilized to form protruding areas 133. As examples, each of Figures 8A and 8B depict an exemplary portion of upper 120 with two different configurations for protruding areas 133. More particularly, a first of protruding areas 133 includes a first tubular structure 134 and a portion of inlaid strand 132, and a second of protruding areas 133 includes a second tubular structure 135 and a plurality of yarn sections 136. Each of these configurations will be discussed in more detail below.

First tubular structure 134 is an area of knit element 131 with two separate and spaced textile layers 137. Whereas edge areas of first tubular structure 134 are joined and formed of unitary knit construction, a central area is unjoined and forms a channel in which inlaid strand 132 is located. Although first tubular structure 134 alone is sufficient to form one of protruding areas 133, the presence of inlaid strand 131 provides additional thickness. Inlaid strand 132 extends longitudinally and through first tubular structure 134, thereby extending along a length of first tubular structure 134.

Second tubular structure 135 is an area of knit element 131 with two separate and spaced textile layers 138, thereby having a configuration that is similar to first tubular structure 134. Whereas edge areas of second tubular structure 135 are joined and formed of unitary knit construction, a central area is unjoined and forms a channel in which the plurality of yarn sections 136 are located. Although second tubular structure 135 alone is sufficient to form one of protruding areas 133, the presence of yarn sections 136 provides additional thickness.

Yarn sections 136 extend laterally and across second tubular structure 135, thereby extending across a width of second tubular structure 135 rather than along a longitudinal length of second tubular structure 135. Although the manner in which yarn sections 136 are secured may vary, yarn sections 136 are depicted as crossing each other in Figures 7A, 7C, 8A, and 8B and may form tuck stitches on opposite sides of second tubular structure 135. That is, tuck stitches may join yarn sections 136 with opposite sides of second tubular structure 135. As depicted in a broken-away area of Figure 8B, one of protruding areas 133 (i.e., a horizontal protruding area 133) includes additional yarn sections 136 and extends between and effectively joins tubular structures 134 and 135, thereby extending from first tubular structure 134 to second tubular structure 135. Although yarn sections 136 may cross each other in extending across the width of second tubular structure 135, yarn sections 136 may have various other configurations. As examples, yarn sections 136 may lay in a plane and not cross each other, or yarn sections 136 may extend longitudinally and along a length of second tubular structure 135.

As discussed above, protruding areas 133 form bulges, protrusions, bumps, or other outwardly-extending portions in knitted component 130. As such, protruding areas 133 are portions of knitted component 130 that have greater thickness than other areas of knitted component 130. In this configuration, a majority or a relatively large portion of knitted component 130 has a first thickness and the various protruding areas 133 have a second thickness, with the first thickness being less than the second thickness. Depending upon the knit structures and knitting techniques that are utilized to form knitted component 130, as well as the yarns utilized in knitted component 130, the difference between the first thickness and the second thickness may range from one to ten millimeters or more. In many configurations, the first thickness is less than four millimeters, and the second thickness is at least two millimeters greater than the first thickness.

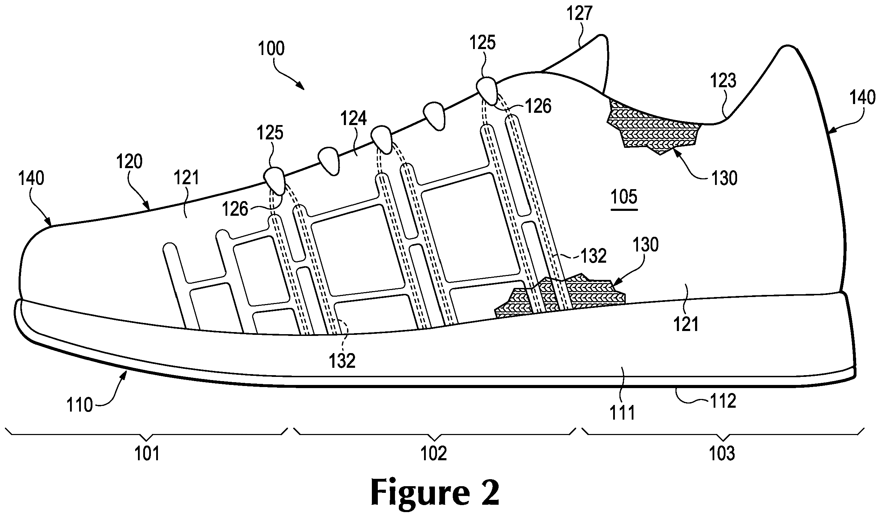

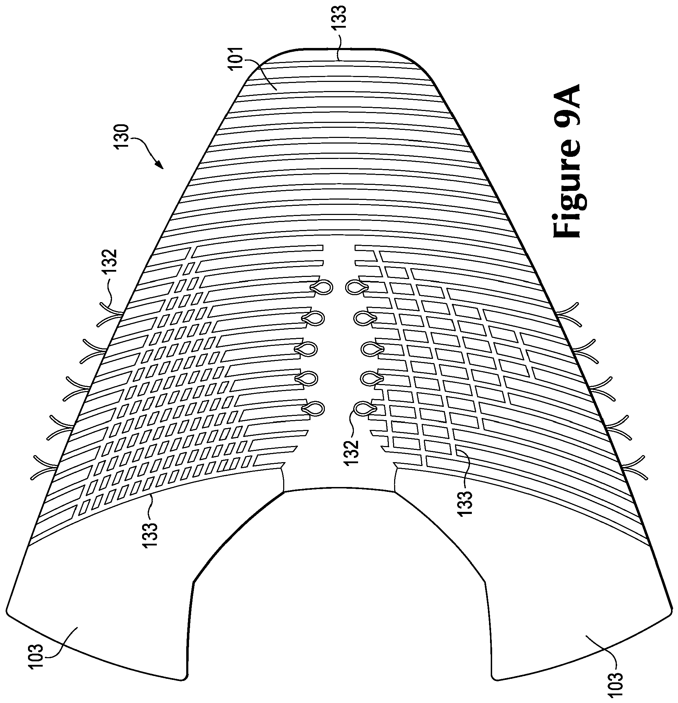

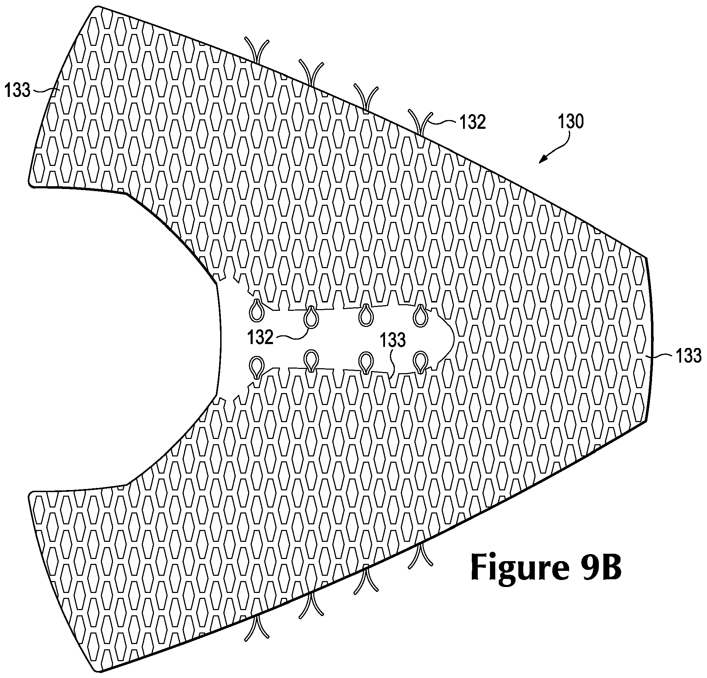

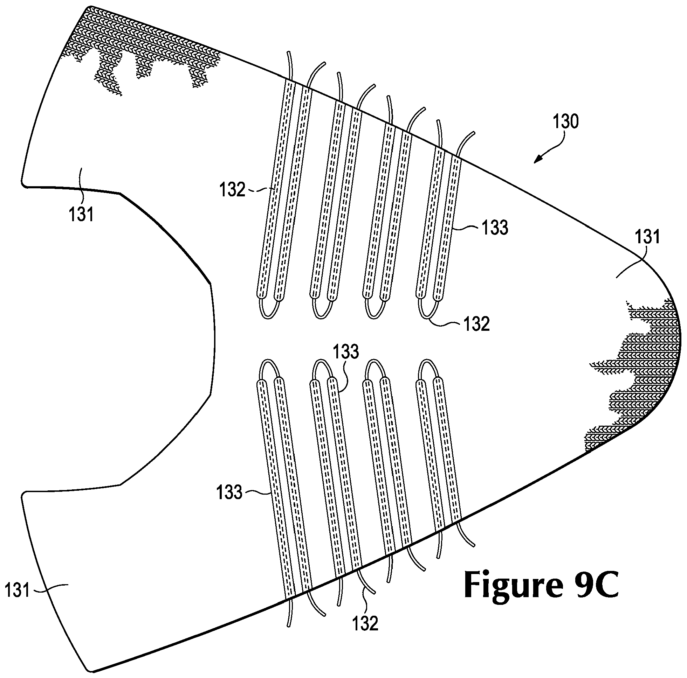

The specific pattern that protruding areas 133 form in upper 120 may vary significantly. Referring to Figures 1 and 2, for example, protruding areas 133 extend though a majority of lateral side 104 and medial side 105, but are absent from a forward portion of forefoot region 101 and a rear portion of heel region 103. The locations and configurations of protruding areas 133 may, however vary significantly. As an example, Figure 9A depicts a configuration wherein the spacing between various protruding areas 133 varies throughout knitted component 130. Moreover, protruding areas 133 that extend between and connect other protruding areas 133 are present in some areas, but absent in other areas. Although protruding areas 133 are present in an area of knitted component 130 that corresponds with forefoot region 101, protruding areas 133 are absent in areas corresponding with heel region 103. In this configuration, knit element 131 extends across a region corresponding with throat area 124, thereby replacing tongue 127. Figure 9B depicts another configuration wherein protruding areas 133 are present throughout knitted component 130. Another configuration is depicted in Figure 9C, wherein protruding areas 133 are located to correspond with inlaid strand 132, but are absent in other areas. In addition, in each of the configurations depicted in Figures 9A-9C, portions of inlaid strand 132 are exposed to form loops that receive lace 125. Accordingly, various aspects regarding knitted component 130 and protruding areas 133 may vary considerably.

### Bonding Process

A variety of processes may be utilized to join knitted component 130 and skin layer 140. In some configurations, skin layer 140 may be formed from a thermoplastic polymer material, which may be welded or thermal bonded to knitted component 130. As discussed above, a thermoplastic polymer material melts when heated and returns to a solid state when cooled sufficiently. Based upon this property of thermoplastic polymer materials, thermal bonding processes may be utilized to form a thermal bond that joins portions of skin layer 140 to knitted component 130. As utilized herein, the term "thermal bonding" or variants thereof is defined as a securing technique between two elements that involves a softening or melting of a thermoplastic polymer material within at least one of the elements such that the materials of the elements are secured to each other when cooled. Similarly, the term "thermal bond" or variants thereof is defined as the bond, link, or structure that joins two elements through a process that involves a softening or melting of a thermoplastic polymer material within at least one of the elements such that the materials of the elements are secured to each other when cooled. As examples, thermal bonding may involve (a) the melting or softening of skin layer 140 such that the thermoplastic polymer material intermingles with materials of knitted component 130 and are secured together when cooled and (b) the melting or softening of skin layer 140 such that the thermoplastic polymer material extends into or infiltrates the structure of knitted component 130 (e.g., extends around or bonds with filaments or fibers in knitted component 130) to secure the elements together when cooled. Additionally, thermal bonding does not generally involve the use of stitching or adhesives, but involves directly bonding elements to each other with heat. In some situations, however, stitching or adhesives may be utilized to supplement the thermal bond or the joining of elements through thermal bonding.

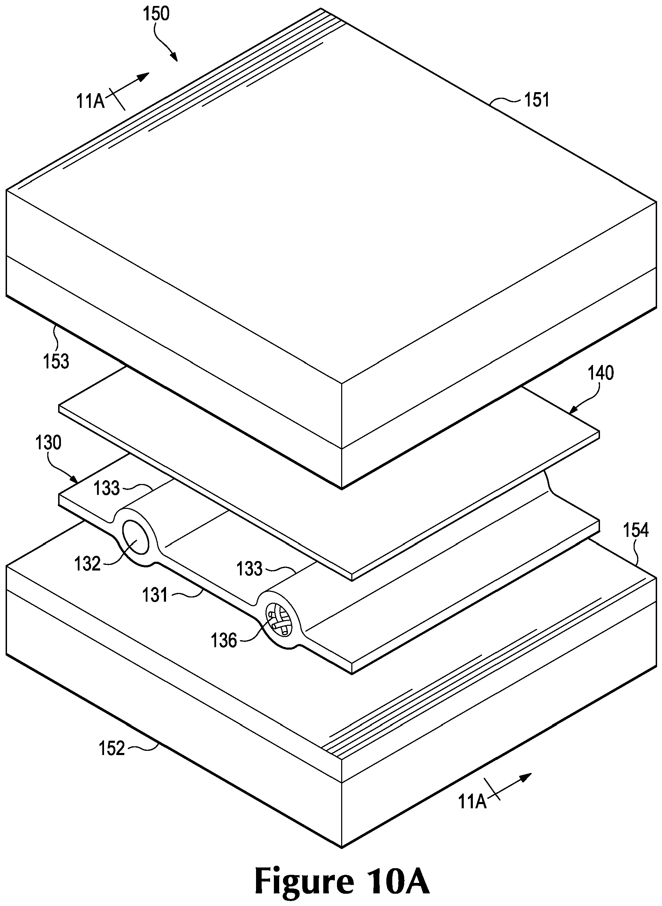

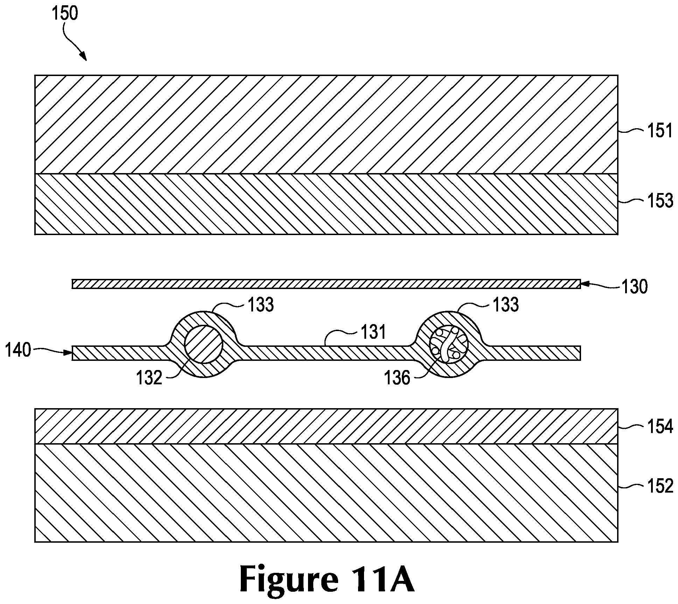

The bonding process utilizes a press 150, which includes a first press portion 151 and a second press portion 152, as depicted in Figures 10A and 11A. Each of press portions 151 and 152 have facing surfaces that compress knitted component 130 and skin layer 140 together. The surfaces of press portions 151 and 152 are substantially planar and include materials with different compressibilities. More particularly, first press portion 151 includes a first material 153 and second press portion 152 includes a second material 154. In comparison, first material 153 has greater compressibility than second material 154. As examples of suitable materials, (a) first material 153 may be silicone and second material 154 may be steel, (b) both of materials 153 and 154 may be silicone, with first material 153 having greater thickness than second material 154, or (c) both of materials 153 and 154 may be silicone, with first material 153 having lesser density or hardness than second material 154. A variety of other materials may also be utilized, including various polymers and foams, such as ethylvinylacetate, and rubber. An advantage to silicone, however, relates to compression set. More particularly, silicone may go through numerous compression operations without forming indentations or other surface irregularities.

A process for bonding or otherwise joining knitted component 130 and skin layer 140 will now be discussed. In order to illustrate details associated with the bonding process, the exemplary portions of knitted component 130 and skin layer 140 that are depicted in Figures 8A and 8B are utilized in Figures 10A-10D and 11A-11D. One skilled in this art will recognize, however, that the concepts discussed herein and depicted in the figures may be applied to the entirety of knitted component 130 and skin layer 140. Referring again to Figures 10A and 11A, skin layer 140 is positioned adjacent to knitted component 130 and in an overlapping configuration. Whereas skin layer 140 is positioned adjacent to first press portion 151, knitted component 130 is positioned adjacent to second press portion 152. More particularly, skin layer 140 is positioned to contact first material 153 (i.e., the more compressible material), and knitted component 130 is positioned to contact second material 154 (i.e., the less compressible material). In order to properly position knitted component 130 and skin layer 140, one or both of (a) a jig that holds the components relative to each other and (b) a shuttle frame or other device that moves the components may be utilized. Additionally, a jig or other device may assist with ensuring that knitted component 130 retains a proper shape and remains in a generally planar configuration during the bonding process.

Press 150 is utilized to compress knitted component 130 and skin layer 140 together. In order to join knitted component 130 and skin layer 140, however, one or both of knitted component 130 and skin layer 140 are heated to a temperature that facilitates bonding. Various radiant heaters or other devices may be utilized to heat knitted component 130 and skin layer 140 prior to placement between press portions 151 and 152. In some manufacturing processes, however, press 150 may be heated such that contact between press 150 and knitted component 130 and skin layer 140 raises the temperature of the components to a level that facilitates bonding. Accordingly, the point at which one or both of knitted component 130 and skin layer 140 are heated during this process may vary.

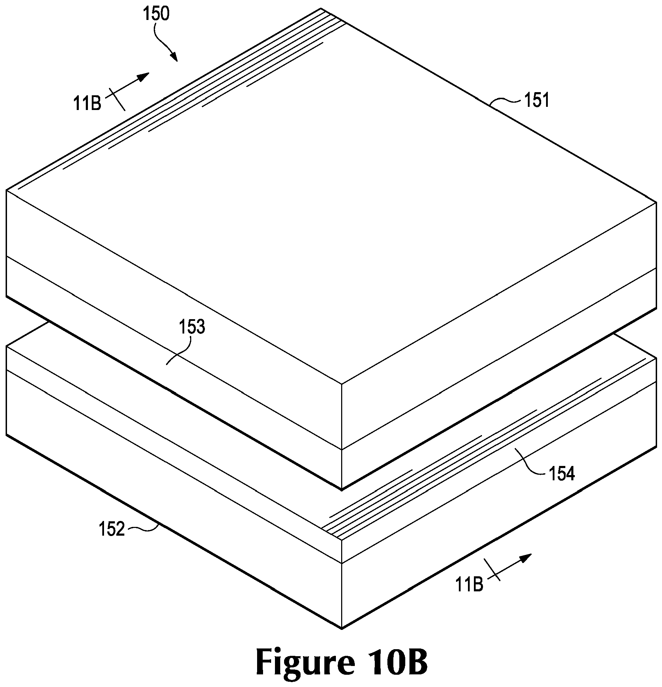

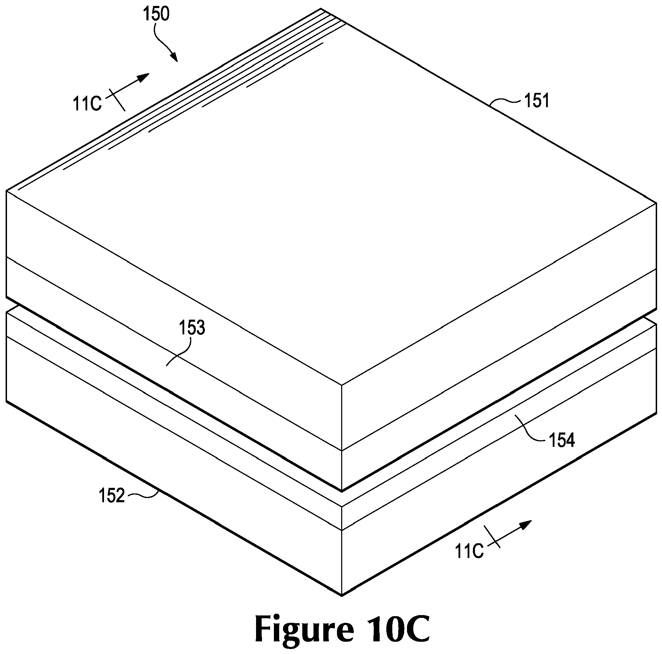

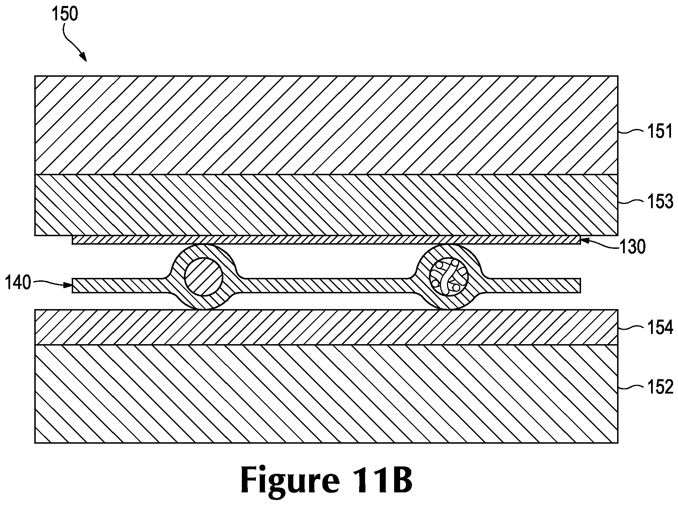

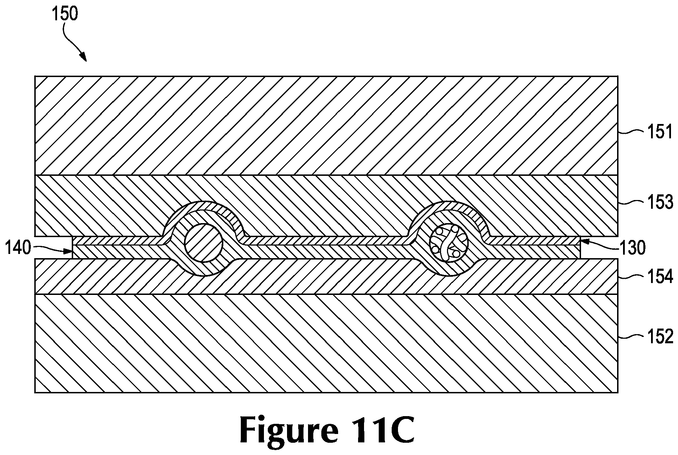

Once knitted component 130 and skin layer 140 are positioned, press portions 151 and 152 translate toward each other and begin to close upon the components such that (a) the surface of first press portion 151 having first material 153 begins to contact skin layer 140 and (b) the surface of second press portion 152 having second material 154 begins to contact knitted component 130, as depicted in Figures 10B and 11B. Press portions 151 and 152 then translate further toward each other to fully compress the components, as depicted in Figures 10C and 11C. At this stage, skin layer 140 is effectively bonded or otherwise joined to knitted component 130. More particularly, the compressive force of press 150, coupled with the elevated temperature of the compressed components, forms a thermal bond that joins knitted component 130 and skin layer 140.

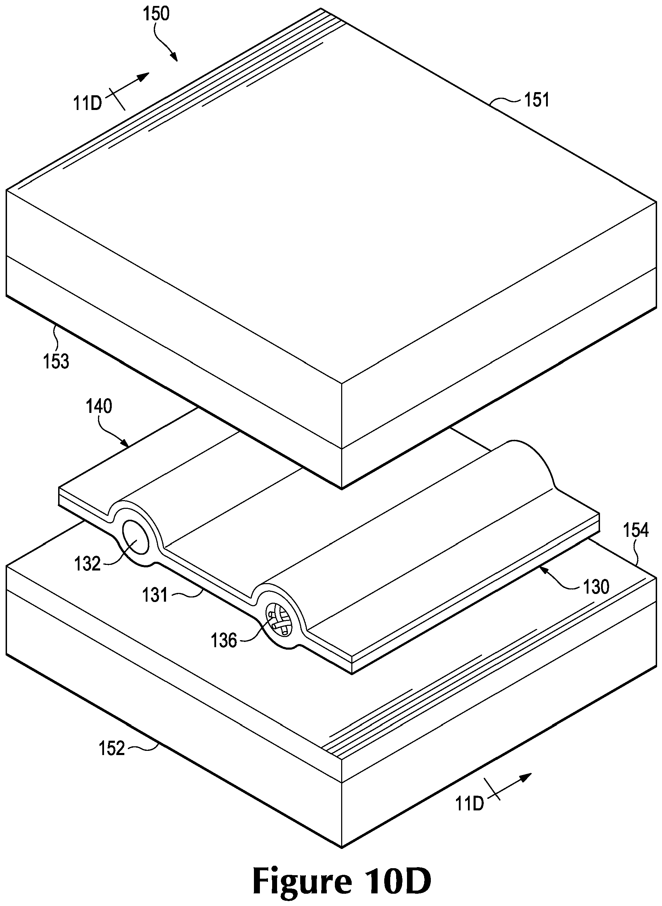

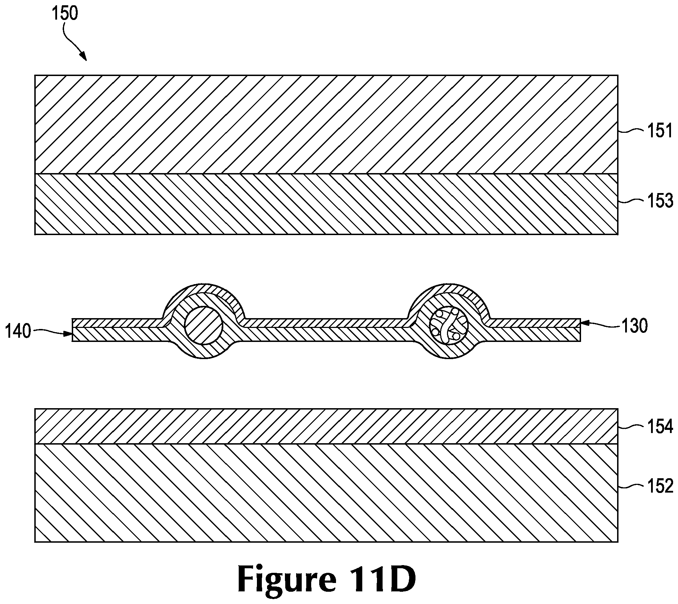

As noted above, first material 153 compresses more easily than second material 154. Referring to Figures 10C and 11C, areas of skin layer 140 that are adjacent to protruding areas 133 press into first material 153, whereas second material 154 remains more planar, but compresses to a lesser degree. Due to the different compressibilities between materials 153 and 154, first material 153 compresses at the locations of protruding areas 133. Moreover, (a) portions of skin layer 140 that are in contact protruding areas 133 of knitted component 130 protrude into the surface formed by first material 153 to a first depth and (b) portions of skin layer 140 that are in contact with other regions of knitted component 130 (i.e., regions with lesser thickness) protrude into the surface formed by first material 153 to a second depth, the first depth being greater than the second depth. When bonding is complete, press 150 is opened and the bonded components are removed and permitted to cool, as depicted in Figures 10D and 11D. As a final step in the process, the combination of knit component 130 and skin layer 140 may be incorporated into upper 120 of footwear 100.

The relative hardnesses, densities, and thicknesses between materials 153 and 154 may vary considerably to provide different compressibilities between the surfaces of press 150. By varying the hardnesses, densities, and thicknesses, the compressibilities of the surfaces may be tailored to specific pressing operations or configurations. While hardness, density, and thickness may each be considered, some configurations of press 150 may have materials 153 and 154 with only different hardnesses, only different densities, or only different thicknesses. Additionally, some configurations of press 150 may have materials 153 and 154 with (a) the same hardnesses and densities, but different thicknesses, (b) the same hardnesses and thicknesses, but different densities, or (c) the same densities and thicknesses, but different hardnesses. Accordingly, the various properties of materials 153 and 154 may be modified in various ways to achieve different relative compressibilities between the surfaces of press 150.

Each of materials 153 and 154 are depicted as having a substantially planar surface. Depending upon the configuration of knitted component 130 and the various protruding areas 133, however, the surfaces of materials 153 and 154 may also be contoured. For example, first material 153 may include various depressions or indentations that correspond with the positions of protruding areas 133, thereby enhancing the degree to which skin layer 140 wraps around protruding areas 133.

Press 150 provides one example of a device that may be utilized to bond knitted component 130 and skin layer 140. As another example, one of press portions 151 and 152 may be replaced with a flexible membrane and a pump may be utilized to evacuate air from between the membrane and second press portion 152. As the air is evacuated, the membrane will press upon skin layer 140 and induce bonding. As another example, a dual membrane system may be utilized to compress knitted component 130 and skin layer 140 together.

An advantage of selecting materials 153 and 154 to have different compressibilities relates to the three-dimensional aspect of upper 120 that protruding areas 133 provide. More particularly, the different compressibilities ensures that protruding areas 133 continue to form bulges, protrusions, bumps, or other outwardly-extending portions when knitted component 130 and skin layer 140 are compressed and bonded. In the absence of compressible materials, the degree to which upper 120 includes outwardly-extending portions at protruding areas 133 may be lessened.

### Ankle Cuff Configuration

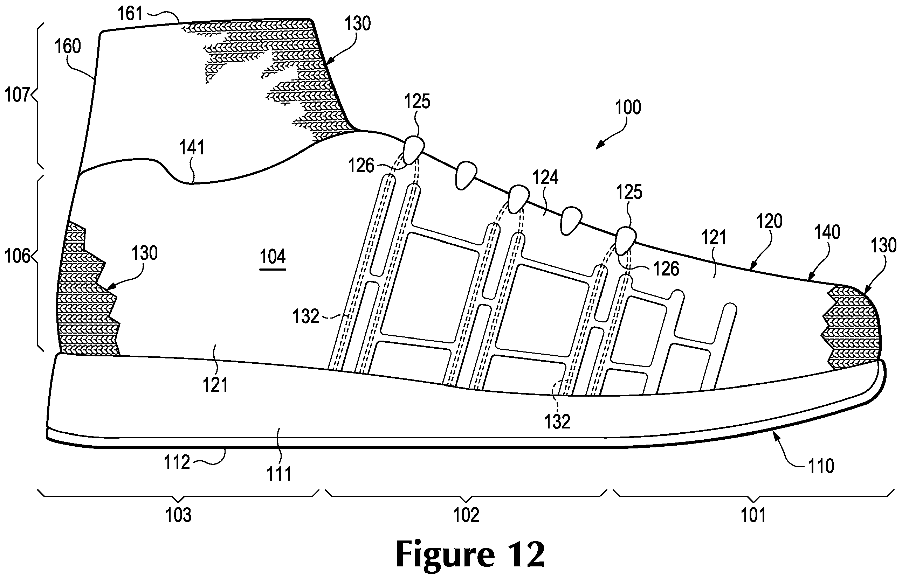

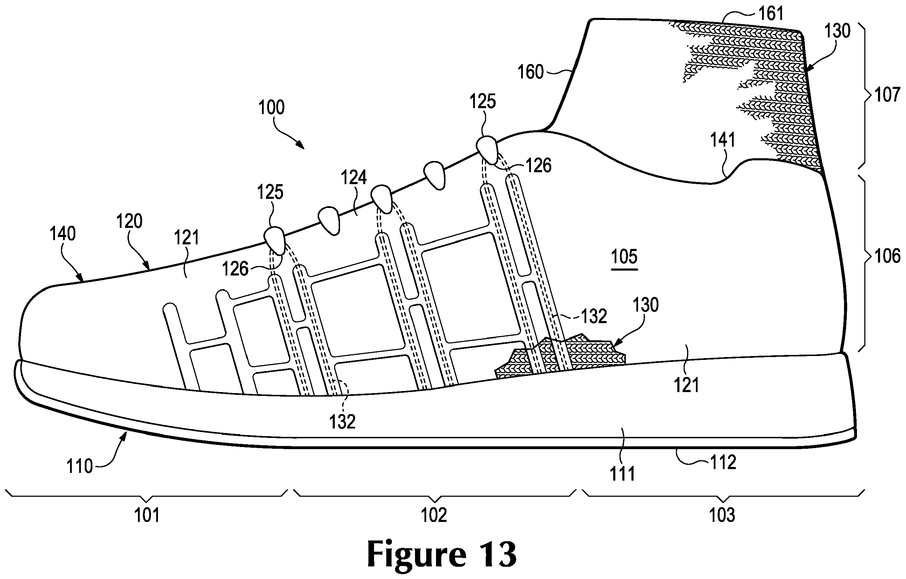

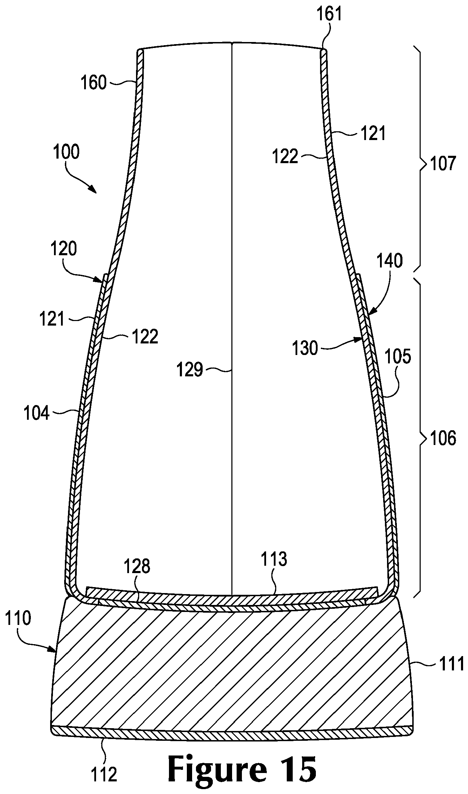

Another configuration of footwear 100 is depicted in Figures 12-15 as including an ankle cuff 160 for covering at least a portion of an ankle of the wearer. In addition to covering the foot, therefore, upper 120 extends upward and covers a portion of the ankle. For reference purposes, upper 120 may be divided into two general regions: a foot region 106 and an ankle region 107, as shown in Figures 12, 13, and 15. Foot region 106 extends through each of regions 101-103 and generally encompasses portions of upper 120 corresponding with the foot. In many configurations of footwear 100, foot region 106 corresponds with portions of upper 120 that are intended to be below the lateral malleolus and the medial malleolus (i.e., the bony prominences on each side of the ankle) of the wearer. Ankle region 107 is primarily located in heel region 103 and generally encompasses portions of upper 120 corresponding with the ankle. In many configurations of footwear 100, ankle region 107 corresponds with portions of upper 120 that are intended to cover and extend above the lateral malleolus and the medial malleolus.

Ankle cuff 160 is located in ankle region 107 and forms an ankle part of knitted component 130. A remainder of knitted component 130, which is located in foot region 106, forms a foot part of knitted component 130. Whereas the foot part of knitted component 130 covers the foot of the wearer, the ankle part of knitted component 130, which includes ankle cuff 160, covers the ankle of the wearer when footwear 100 is worn. Moreover, ankle cuff 160 and the ankle part of knitted component 130 may be formed of unitary knit construction with the foot part of knitted component 130.

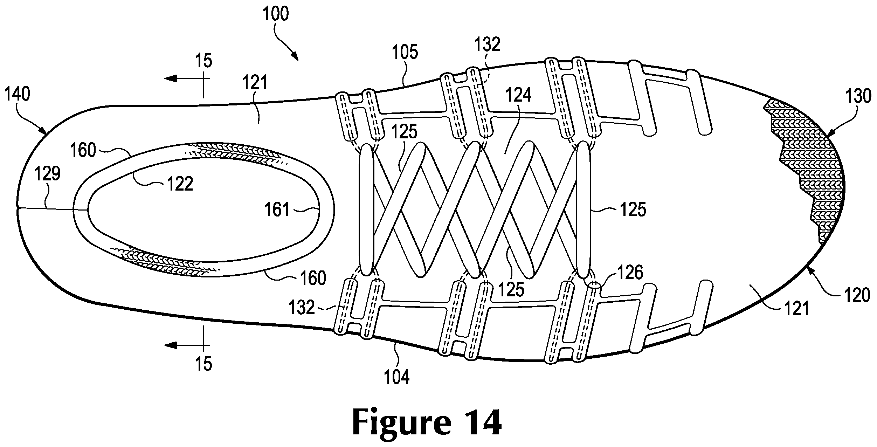

Although seam 129 may be present in ankle cuff 160, the ankle part of knitted component 130 has a continuous structure for extending entirely around the ankle of the wearer. Referring to the top plan view of Figure 14, ankle cuff 160 forms a circular, oval, or otherwise continuous and rounded opening 161 that provides access to the void within upper 120. Opening 161 may have relatively large dimensions that allow the foot to pass through and into the void. In many configurations of footwear 100, however, opening 161 stretches to accommodate the foot. Moreover, ankle cuff 160 may have dimensions that are less than an average ankle, and ankle cuff may remain somewhat stretched and lay firmly against the ankle once the foot is located within the void. Accordingly, ankle cuff 160 and other portions of knitted component 130 in ankle region 107 may be formed to have stretch properties.

Whereas ankle region 107 has stretch properties, foot region 108 of upper 120 may stretch to a lesser degree to provide support for the foot and limit movement of the foot relative to sole structure 120. That is, foot region 106 may have a first degree of stretch and ankle region 107 may have a second degree of stretch, with the first degree of stretch being less than the second degree of stretch. In some configurations, portions of knitted component 130 in both of region 106 and 107 may have similar stretch properties, and the presence of inlaid strand 132 and skin layer 140 in foot region 106 may limit stretch in foot region 106. In other configurations, the ankle part of knitted component 130 may be formed from yarns or knit structures that impart stretch, whereas the foot part of knitted component 130 may be formed from yarns or knit structures that impart less stretch.

In order to enhance the stretch properties of ankle cuff 160, skin layer 140 may be absent from ankle region 107. That is, skin layer 140 may be absent from the ankle part of knitted component 130. In this configuration, the ankle part of knitted component 130, including ankle cuff 160, forms a portion of exterior surface 121 and interior surface 122 in ankle region 107. As such, skin layer 140 and the portions knitted component 130 that form ankle cuff 160 form a majority of exterior surface 121, and knitted component 130 alone may form a relatively large portion of interior surface 122.

In the area of ankle cuff 160, skin layer 140 forms a concave edge 141 that extends downward on each of sides 104 and 105. More particularly, skin layer 140 may be absent from areas of knitted component 130 that cover the lateral malleolus and the medial malleolus. An advantage of this configuration is that ankle cuff 160 may stretch over the lateral malleolus and the medial malleolus, thereby enhancing the comfort of footwear 100. In other configurations, skin layer 140 may extend upward to cover the lateral malleolus and the medial malleolus, or edge 141 may be relatively straight or convex in the area of ankle cuff 160.

Based upon the above discussion, ankle cuff 160 may exhibit greater stretch than other portions of upper 120. In addition to allowing the foot to enter footwear 100, this structure provides support for the foot and limits movement of the foot relative to sole structure 120. In addition, ankle cuff 160 may remain in a stretched state and lay against the ankle when footwear 100 is worn, which imparts two advantages: First, ankle cuff 160 prevents or limits dirt, dust, and other debris from entering footwear 100. Second, the wearer may sense the presence of ankle cuff 160 around the ankle, which enhances the wearer's proprioceptive awareness of the foot.

### Lace Channel Configuration

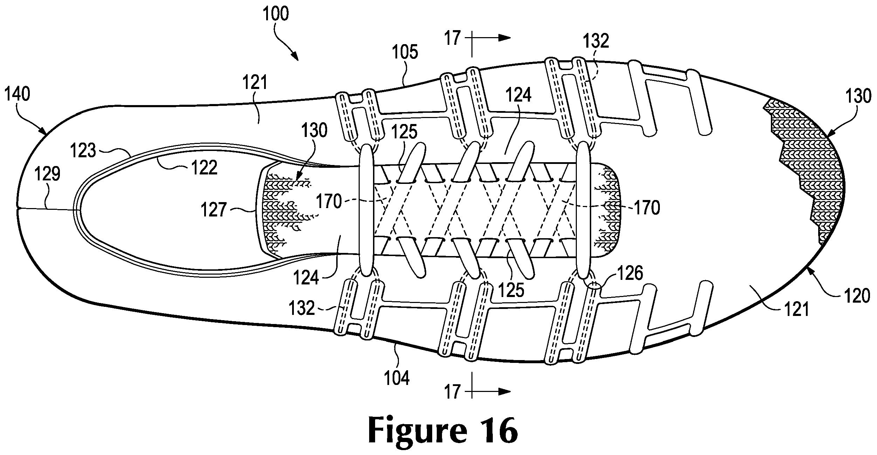

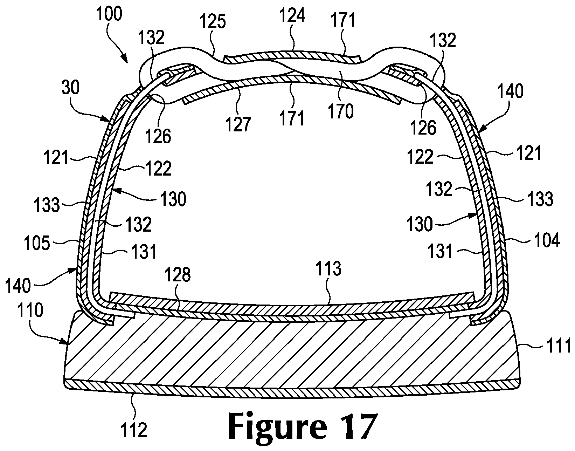

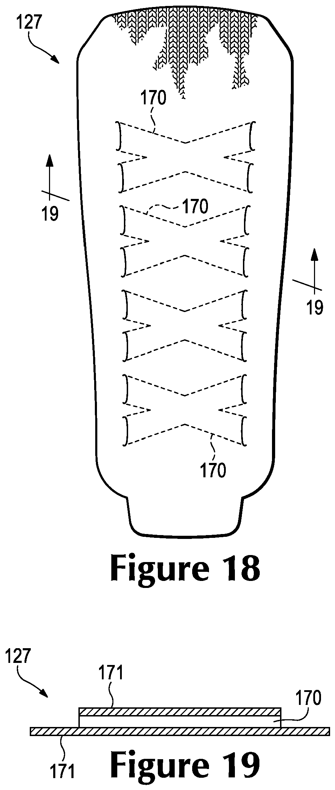

A further configuration of footwear 100 is depicted in Figures 16 and 17 as including various lace channels 170 in tongue 127. Lace 125 passes through lace channels 170, thereby locating portions of lace 125 within tongue 127. Referring to Figures 18 and 19, which depict tongue 127 separate from a remainder of footwear 100, each of lace channels 170 are oriented diagonally with respect to a longitudinal axis of footwear 100. The locations of lace channels 170 generally correspond with the locations of lace-receiving elements 126 and follow the natural path of lace 125 as it passes between lace-receiving elements 126. That is, the positions and orientations of lace channels 170 are selected such that two of lace-receiving elements 126 are located adjacent to opposite ends of each lace channel 170. In effect, therefore, lace channels 170 are located along a line that extends between two lace-receiving elements 126. Moreover, lace 125 extends through the various lace channels 170 and engages lace-receiving elements 126 that are located on opposite sides of lace channels 170. As such, lace 125 follows a zigzagging path between lace-receiving elements 126.

Lace channels 170 have a structure that is similar to tubular structures 134 and 135. As such, lace channels 170 include two separate and spaced textile layers 171 that overlap each other. Whereas edge areas of lace channels 170 are joined and formed of unitary knit construction, a central area is unjoined and forms a tubular structure in which lace 125 is located. That is, lace 125 extends longitudinally and through each lace channel 170, thereby extending along a length of each lace channel 170.

Although various methods may be utilized to form tongue 127, a knitting process (e.g., flat knitting process) may be utilized. In configurations where a similar knitting process is utilized for tongue 127 and knitted component 130, each of tongue 127 and knitted component 130 may have similar properties, materials, and aesthetics. Additionally, an advantage of the knitting process is that lace channels 170 may be formed of unitary knit construction with a remainder of tongue 127, which provides efficient manufacture and imparts a smooth and seamless configuration to tongue 127.

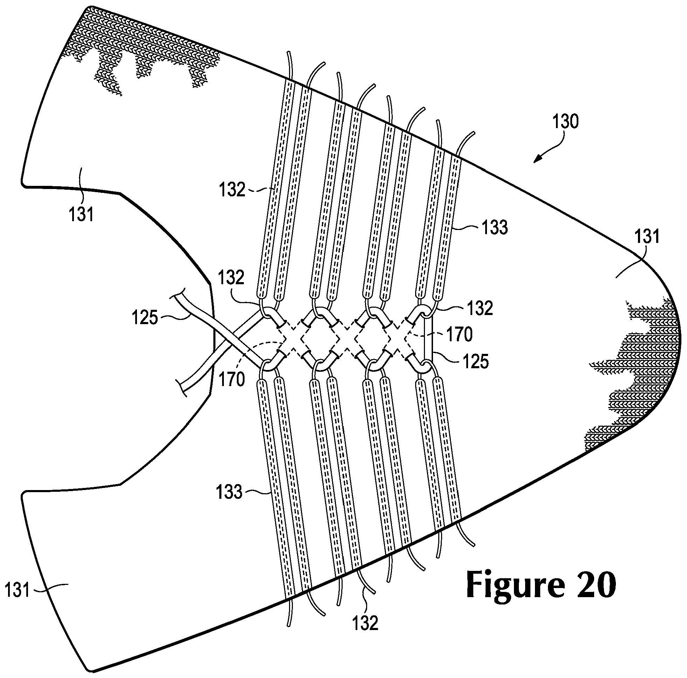

A configuration of knitted component 130 in combination with lace 125 is depicted in Figure 20. As with the configurations in Figures 9A-9C, knit element 131 extends across a region corresponding with throat area 124, thereby replacing tongue 127. Moreover, knit element 131 forms the various lace channels 170. As with the various lace channels 170 in tongue 127, lace channels 170 in this configuration are two separate and spaced textile layers that overlap each other, are formed of unitary knit construction, and receive lace 125.

Lace 125 is depicted as extending through lace channels 170 in Figure 20. In place of apertures that form lace-receiving elements 126, inlaid strand 132 is exposed and forms loops for receiving lace 125. That is, the loops formed by inlaid strand 132 are lace-receiving elements 126, which are located on opposite sides of throat area 124. Lace 125 extends through (a) the loops formed by inlaid strand 132 and (b) the various lace channels 170. As with tongue 127, each of lace channels 170 are oriented diagonally with respect to a longitudinal axis and follow the natural path of lace 125. That is, the positions and orientations of lace channels 170 are selected such that two loops are located adjacent to opposite ends of each lace channel 170. As such, lace 125 follows a zigzagging path between the loops formed by inlaid strand 132.

Lace channels 170 may have various lengths. In Figure 16, ends of lace channels 170 are positioned adjacent to an edge of knitted component 130 in throat area 124. Although knitted component 130 overlaps portions of tongue 127, ends of lace channels 170 are exposed and receive lace 125. In Figure 20, ends of lace channels 170 are positioned adjacent to the loops that form lace-receiving elements 126. In either configuration, one or more of lace channels 170 may have a length greater than three centimeters. In other configurations, however, lace channels 170 may range from one to more than ten centimeters.

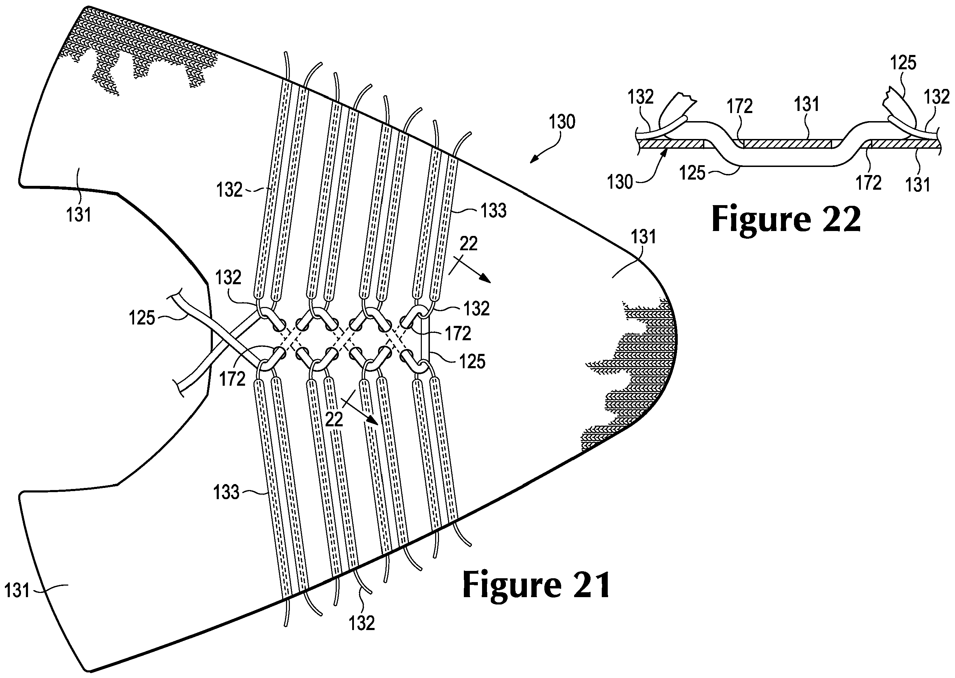

A further configuration of knitted component 130 is depicted in Figures 21 and 22 as defining various apertures 172 between loops formed by inlaid strand 132 and in the region corresponding with throat area 124. Apertures 172 form openings that extend through knit element 131. In this configuration, lace 125 extends through the various apertures 172, and portions of lace 125 are located adjacent to an opposite side of knit element 131. More particularly, lace 125 passes through the loops formed by inlaid strand 132 and enters apertures 172, thereby positioning portions of lace 125 that are between the loops adjacent to the opposite side of knit element 131. The locations of apertures 172 generally correspond with the locations of the loops formed by inlaid strand 132 and follow the natural path of lace 125. That is, apertures 172 are located along a line that extends between two of the loops formed by inlaid strand 132.

### Further Configurations of Skin Layer

Various configurations of footwear 100, upper 120, knitted component 130, and skin layer 140 are discussed above. There configurations, however, are intended to provide examples of structures and other features that may be incorporated into footwear 100. Although many variations upon footwear 100, upper 120, knitted component 130, and skin layer 140 are possible, some additional configurations are discussed below.

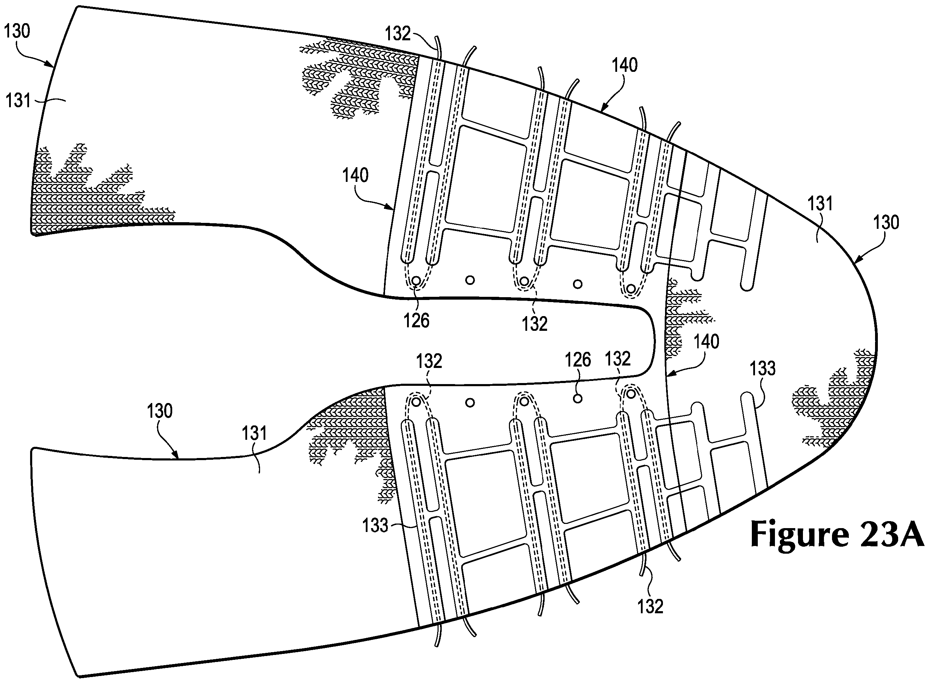

Although skin layer 140 may cover substantially all of knitted component 130, skin layer 140 may be absent from some areas of knitted component 130. With reference to examples discussed above, skin layer 140 may be absent from throat area 124 or ankle region 107. As another example, Figure 23A depicts skin layer 140 as being present in areas corresponding with midfoot region 103 and areas that include inlaid strand 132, but absent in areas corresponding with forefoot region 101 and heel region 103. Moreover, skin layer 140 covers some of protruding areas 133, but leaves other protruding areas 133 exposed. Accordingly, skin layer 140 may only cover specific areas of knitted component 130, thereby leaving other areas of knitted component 130 exposed.

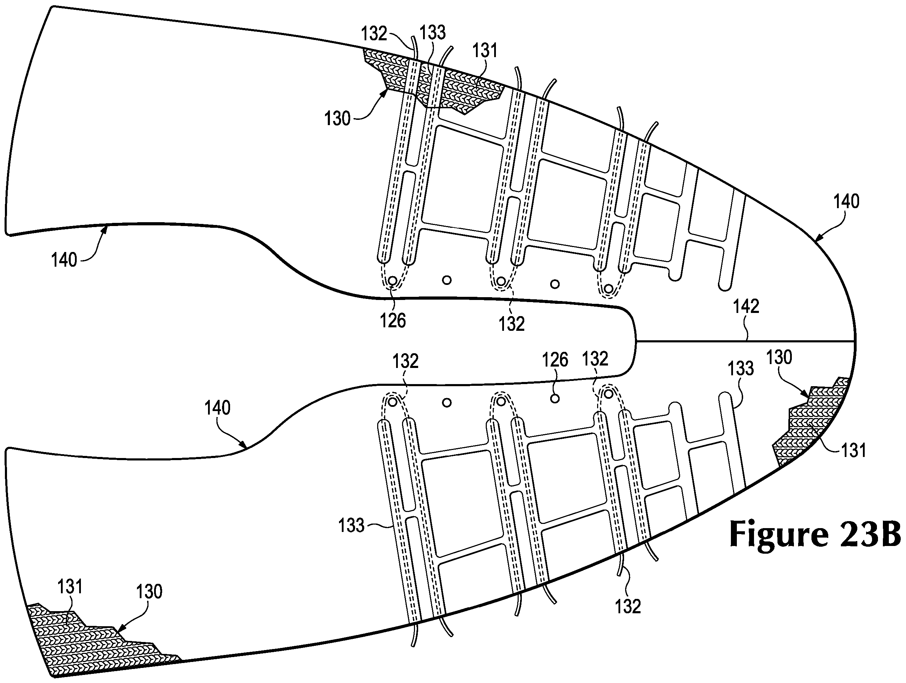

A single element of skin layer 140 is secured to knitted component 130 in many configurations discussed above. Referring to Figure 23B, a parting line 142 extends longitudinally through an area corresponding with forefoot region 101, thereby separating different sections of skin layer 140. In this configuration, each section of skin layer 140 may have different properties. More particularly, the material forming skin layer 140, the thickness of the material, or other properties may vary between the sections of skin layer 140, thereby imparting different properties to different areas of upper 120. In further configurations, parting line 142 may be located in other areas, or the sections of skin layer 140 may be spaced from each other to expose a portion of knitted component 130.

### Interior Layer Features

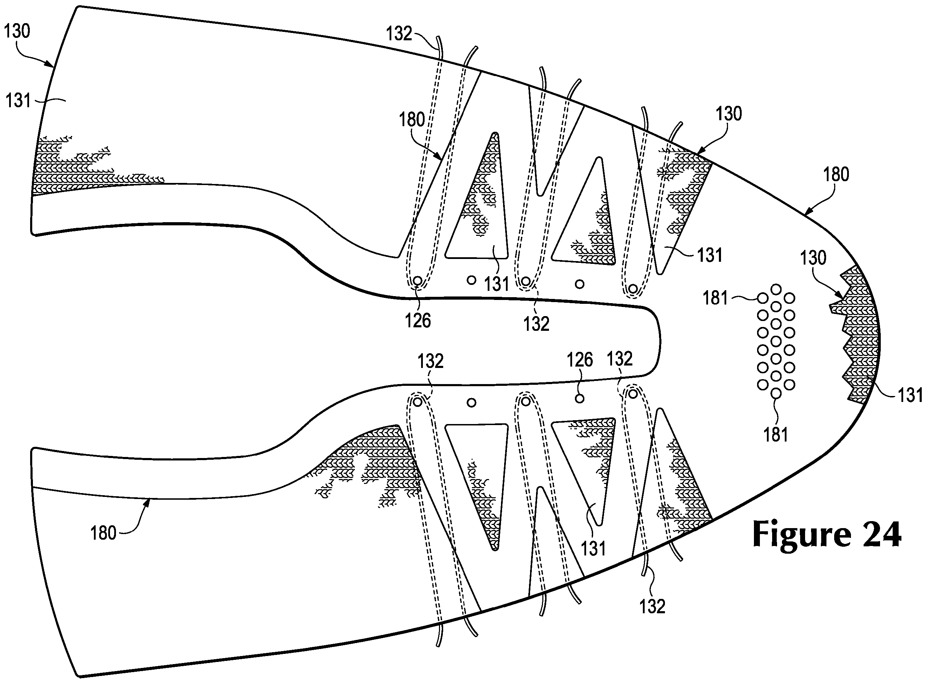

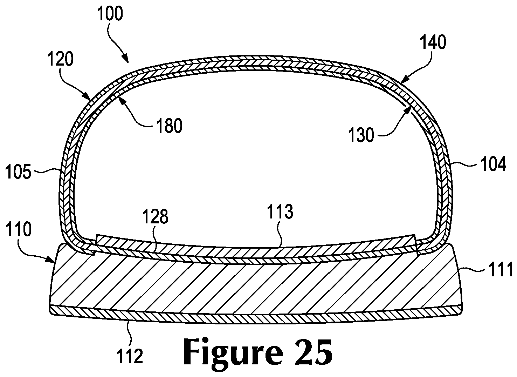

In many configurations of footwear 100, knitted component 130 forms a majority of interior surface 122. Referring to Figures 24 and 25, an interior layer 180 is depicted as being secured to knitted component 130 and forming a portion of interior surface 122. Interior layer 180 may inhibit stretch in upper 120 and may enhance the wear-resistance or abrasion-resistance of upper 120. Interior layer 180 may also impart water-resistance to footwear 100. Additionally, forming footwear 100 to include interior layer 180 may provide uniform fit and conformance to the foot, a relatively seamless interior with enhanced comfort for the wearer, a relatively light weight, and support for the foot. Although interior layer 180 may be utilized in configurations that also include skin layer 140, interior layer 180 may be utilized in the absence of skin layer 140 or as a replacement for skin layer 180.

Interior layer 180 may extend over substantially all of knitted component 130 or may be absent in specific areas of knitted component 130. In areas corresponding with forefoot region 101, for example, interior layer 180 defines a plurality of apertures 181 that may enhance the stretch, flex, and breathability properties of upper 120. By varying the size, position, and number of apertures 181, the properties of upper 120 may also be varied. In areas adjacent to inlaid strand 132, interior layer 180 is formed to define larger apertures and has an articulated structure, which may promote flex in areas corresponding with midfoot region 102, while also providing stability and stretch-resistance. This portion of interior layer 180 may also experience tension and resist stretching when lace 125 is tightened. As such, the combination of interior layer 180 and inlaid strand 132 may impart greater resistance to stretch in upper 120. In areas corresponding with heel region 103, interior layer 180 is located to provide additional stretch-resistance and durability to collar 123. It should also be noted that interior layer 180 extends to edges of knitted component 130 that are joined with strobel sock 128, which effectively ties or joins interior layer 180 to sole structure 110.

Various materials may be utilized for interior layer 180. As an example, interior layer 180 may be a polymer layer with many of the properties of skin layer 140. Interior layer 180 may also be a textile, such as a microfiber textile, that is adhered or bonded to knitted component 130. In some configurations, interior layer 180 may have a layered configuration that includes a thermoplastic polymer material for thermal bonding with knitted component 130.

In some embodiments, an interior layer may be provided for knitted component 130 that has an asymmetric configuration. An asymmetric configuration for an interior layer may selectively locate portions of the interior layer on specific areas of knitted component 130 that vary between lateral side 104 and medial side 105. With this asymmetric configuration, the interior layer may be configured to provide different properties to upper 120 that vary between lateral side 104 and medial side 105. For example, in embodiments where article of footwear 100 is a soccer shoe, the properties of upper 120 may be varied between lateral side 104 and medial side 105 to account for different interactions with a soccer ball between the sides. In an exemplary embodiment, an asymmetric interior layer may be disposed a shorter distance along medial side 105 to midfoot region 102 of upper 120 than the distance of asymmetric interior layer along lateral side 104 of upper 120. With this configuration, a portion of asymmetric interior layer may be absent along midfoot region 102 of upper 120 on medial side 105 to allow a wearer of article 100 to have more sensitive "feel" of the soccer ball for passing or holding along medial side 105 of upper 120. In addition, the portion of asymmetric interior layer that is present through midfoot region 102 of upper 120 on lateral side 104 may provide additional dampening or padding to article 100 to assist with absorbing impacts with a soccer ball or other objects on lateral side 104 of upper 120.

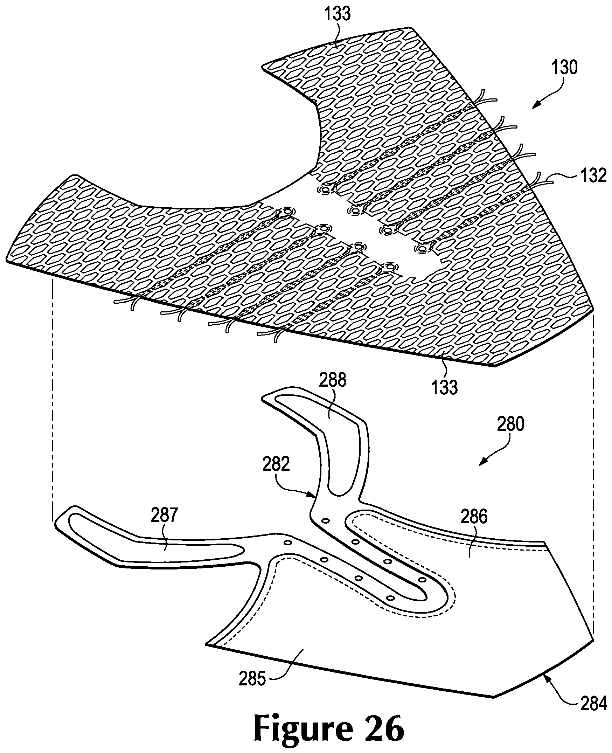

Figures 26 through 35A-35C illustrate various embodiments of asymmetric interior layer configurations that may be used with any of the knitted components described above, including knitted component 130. As shown in Figures 26 through 35A-35C, a knitted component substantially similar to the embodiment of knitted component 130 illustrated in Figure 9B, wherein protruding areas 133 are present throughout knitted component 130 may be used with asymmetric interior layer configurations. It should be understood that while the exemplary configurations of asymmetric interior layers described in reference to Figures 26 through 35A-35C may be shown with a specific knitted component, in other embodiments, the asymmetric interior layers may be used with any knitted component.

Figures 26 through 30A-30B illustrate a first configuration of an asymmetric interior layer 280. In some embodiments, asymmetric interior layer 280 may be formed by multiple components. In an exemplary embodiment, asymmetric interior layer 280 may include a connecting layer 282 and a lining layer 284. Referring now to Figure 26, first configuration of asymmetric interior layer 280 includes connecting layer 282 and one or more portions of lining layer 284 arranged together to form interior layer 280. Connecting layer 282 may be formed from a material that is configured to bond with or adhere to portions of interior surface 122 of knitted component 130 and/or lining layer 284. For example, connecting layer 282 may be made from a thermoplastic polymer material, which softens or melts when heated and returns to a solid state when cooled. More particularly, the thermoplastic polymer material transitions from a solid state to a softened or liquid state when subjected to sufficient heat, and then the thermoplastic polymer material transitions from the softened or liquid state to the solid state when sufficiently cooled. In this case, connecting layer 282 incorporating a thermoplastic polymer material may be used to join (a) connecting layer 282 to interior surface 122 of knitted component 130, and/or (b) lining layer 284 to interior surface 122 of knitted component 130.

Lining layer 284 may formed from a textile, such as a mesh textile material or a microfiber textile material, that is adhered or bonded to knitted component 130. In an exemplary embodiment, lining layer 284 may be selected from any suitable textile material that is configured to provide padding and/or cushioning along portions of interior surface 122 of upper 120. In some embodiments, lining layer 284 may be adhesively attached to interior surface 122 of knitted component 130. In addition, connecting layer 282 incorporating a thermoplastic polymer material may overlap with one or more portions of lining layer 284 to assist with attaching lining layer 284 to knitted component 130.

In some embodiments, lining layer 284 may include one or more separate components. For example, as shown in Figures 26 through 28, lining layer 284 may include a lateral lining portion 285 and a medial lining portion 286 disposed, respectively, on lateral side 104 and medial side 105 of lining layer 284. In this embodiment, lateral lining portion 285 and medial lining portion 286 extend through forefoot region 101 and at least a portion of midfoot region 102. In an exemplary embodiment, lateral lining portion 285 and medial lining portion 286 extend substantially continuously between lateral side 104 and medial side 105 and across forefoot region 101 of knitted component 130. With this configuration, lateral lining portion 285 and medial lining portion 286 may be substantially continuous with each other so as to form a substantial majority of lining layer 284. In other embodiments, however, lateral lining portion 285 and medial lining portion 286 may be provided as separate components of lining layer 284.

In addition, in some embodiments, lining layer 284 may further include portions that are associated with a collar in heel region 103 that forms the opening for receiving a foot within upper 120. In this embodiment, lining layer 284 includes a lateral collar portion 287 and a medial collar portion 288 disposed on opposite sides of interior layer 280. Lateral collar portion 287 and medial collar portion 288 may be configured to provide additional padding and/or cushioning along interior surface 122 of the portion of knitted component 130 that forms collar 123, described above. In this embodiment, each of lateral collar portion 287 and medial collar portion 288 are provided separately and in a discontinuous manner with lateral lining portion 285 and medial lining portion 286 forming the remaining portions of lining layer 284. In one embodiment, lateral collar portion 287 and medial collar portion 288 are entirely circumscribed and surrounded by portions of connecting layer 282. However, in other embodiments, one or more collar portions of a lining layer may be provided in a substantially continuous manner with the remaining portions of the lining layer.

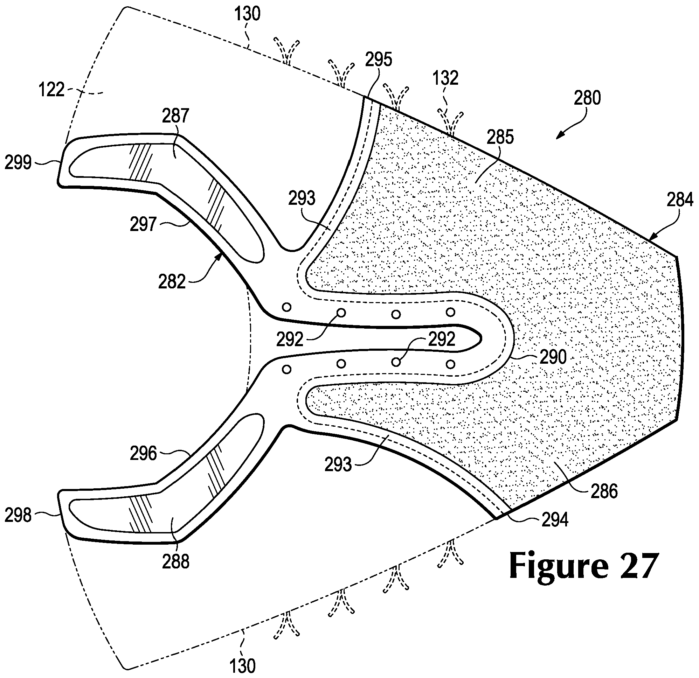

Referring now to Figure 27, first configuration of asymmetric interior layer 280 is illustrated in a top plan view disposed along interior surface 122 of knitted component 130. In an exemplary embodiment, asymmetric interior layer 280 may be disposed a shorter distance along medial side 105 of midfoot region 102 of upper 120 than the distance of asymmetric interior layer 280 along lateral side 104 of upper 120. In this embodiment, lateral lining portion 285 and medial lining portion 286 have different sizes and shapes to provide asymmetric interior layer 280 with an asymmetric arrangement. As shown in Figure 27, lateral lining portion 285 is larger, and extends to a further distance in midfoot region 102 of knitted component 130, than medial lining portion 286.

Connecting layer 282 may include multiple components configured to outline and/or partially overlap with portions of lining layer 284 so as to facilitate attachment of lining layer 284 with interior surface 122 of knitted component 130. In this embodiment, connecting layer 282 includes a throat portion 290. Throat portion 290 is centrally located approximately within the middle of asymmetric interior layer 280 and primarily in midfoot region 102. In some embodiments, throat portion 290 may correspond with an instep region or upper surface of a foot. When asymmetric interior layer 280 is combined with knitted component 130 to form upper 120, throat portion 290 of connecting layer 282 may correspond with throat area 124 of upper 120. In an exemplary embodiment, throat portion 290 may divide and separate lateral lining portion 285 and medial lining portion 286 on either side of throat portion 290.

In some embodiments, throat portion 290 of connecting layer 282 may include a plurality of lace apertures 292. Plurality of lace apertures 292 may be disposed along and adjacent to a perimeter edge of throat portion 290, as shown in Figure 27. In some embodiments, plurality of lace apertures 292 correspond with lace-receiving elements 126 on knitted component 130. Lace apertures 292 may provide additional reinforcement and/or support to lace-receiving elements 126.

Connecting layer 282 may include portions extending from throat portion 290 in different directions towards edges of asymmetric interior layer 280. For example, connecting layer 282 may include portions that extend in a lateral direction toward each of lateral side 104 and medial side 105. In this embodiment, connecting layer 282 includes a medial extending portion 294 that extends from throat portion 290 in a direction towards medial side 105. Medial extending portion 294 may further extend in a forwards direction towards forefoot region 101 so as to outline a perimeter of medial lining portion 286. Connecting layer 282 also includes a lateral extending portion 295 that extends from throat portion 290 in a direction towards lateral side 104 and is disposed opposite of medial extending portion 294. Lateral extending portion 295 may extends towards lateral side 104 following along and outlining a perimeter of lateral lining portion 285.

Connecting layer may also include portions that extend rearwards in a longitudinal direction toward heel region 103. In this embodiment, connecting layer 282 includes a medial collar portion 296 that extends from throat portion 290 to a medial edge 298. Connecting layer 282 may also include a lateral collar portion 297 that extends from throat portion 290 to a lateral edge 299. When asymmetric interior layer 280 is combined with knitted component 130, medial edge 298 of connecting layer 282 corresponds with an outer perimeter of knitted component 130 on medial side 105 of heel region 103, and lateral edge 299 of connecting layer 282 corresponds with the outer perimeter of knitted component 130 on lateral side 104 of heel region 103. In an exemplary embodiment, lateral collar portion 297 of connecting layer 282 may surround and circumscribe lateral collar portion 287 of lining layer 284 and medial collar portion 298 may surround and circumscribe medial collar portion 288 of lining layer 284.

In an exemplary embodiment, connecting layer 282 may further include an overlapping region 293. Overlapping region 293 is a portion of connecting layer 282 that is configured to overlap with and at least partially infiltrate into lining layer 284 so as to join lining layer 284 and connecting layer 282. In this embodiment, overlapping region 293 extends along medial extending portion 294 overlapping a portion of medial lining portion 286, through throat portion 290 overlapping portions of medial lining portion 286 and lateral lining portion 285, and along lateral extending portion 295 overlapping a portion of lateral lining portion 285. Additionally, overlapping region 293 may further extend through throat portion 290 overlapping portions of medial lining portion 286 and lateral lining portion 285.

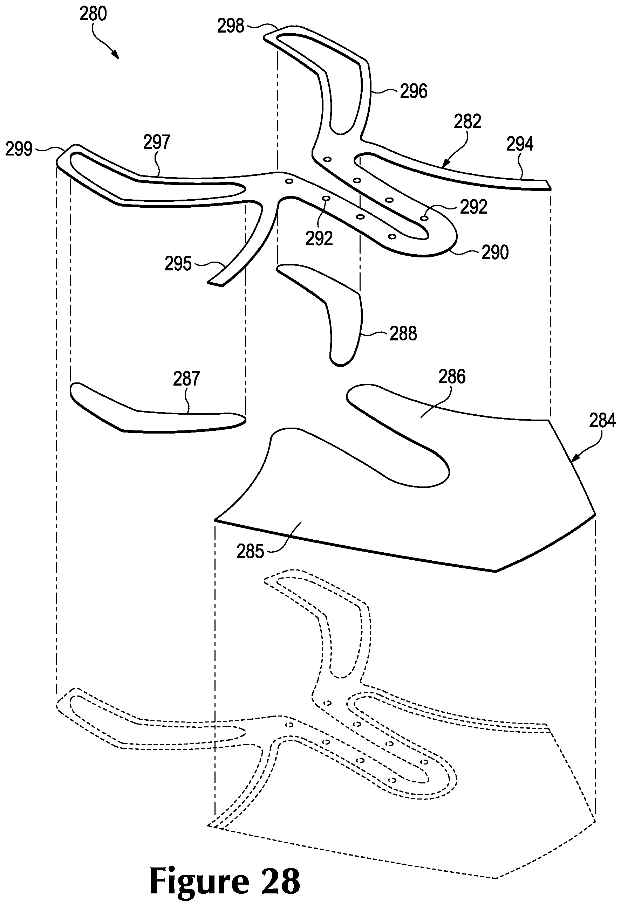

Figure 28 illustrates an exploded view of the components forming an exemplary embodiment of first configuration of asymmetric interior layer 280, described above. As shown in Figure 28, asymmetric interior layer 280 includes connecting layer 282 and lining layer 284. Connecting layer 282 includes throat portion 290 (including plurality of apertures 292), medial extending portion 294, lateral extending portion 295, medial collar portion 296, and lateral collar portion 297. Lining layer 284 includes lateral lining portion 285, medial lining portion 286, lateral collar portion 287, and medial collar portion 288. As described previously, connecting layer 282 may be formed of a polymer material that is configured to attach portions of lining layer 284 with connecting layer 282 to form asymmetric interior layer 280, and/or to assist with attaching portions of asymmetric interior layer 280 to interior surface 122 of knitted component 130.

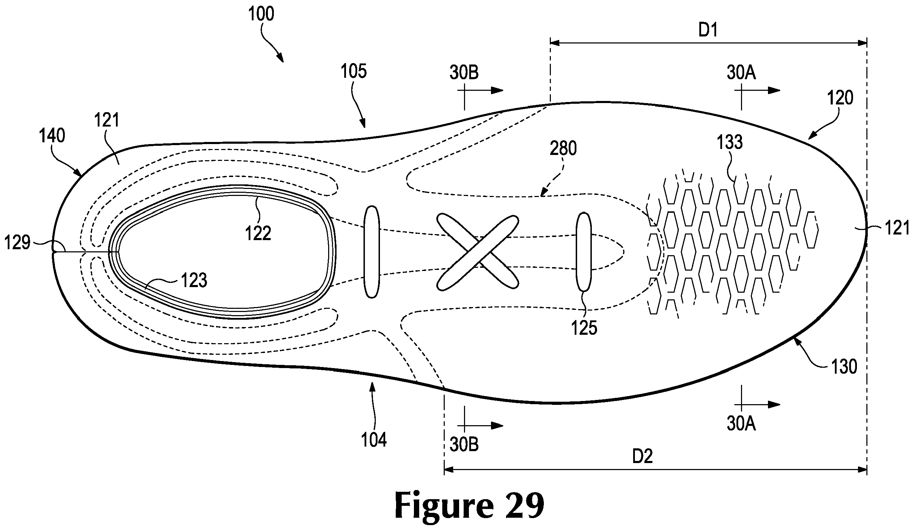

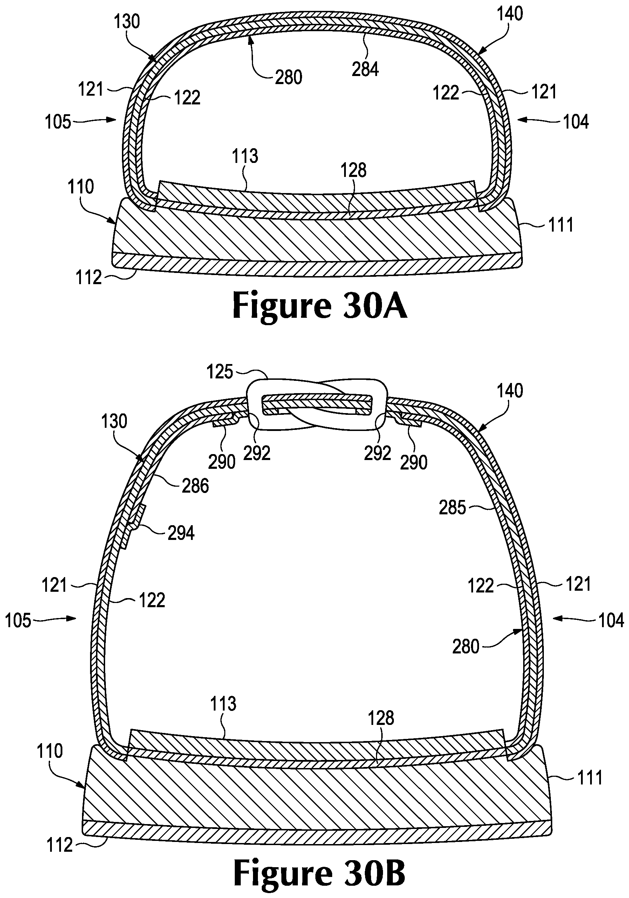

Referring now to Figures 29 and 30A-30B, first configuration of asymmetric interior layer 280 has been combined with knitted component 130 to form upper 120 of an exemplary embodiment of article 100. Article 100 includes the components of an article of footwear described above, including lace 125, skin layer 140, and plurality of protruding areas 133. In this embodiment, the asymmetric configuration of asymmetric interior layer 280 may be seen with reference to the difference between the portions of lining layer 284 disposed on each of lateral side 104 and medial side 105.

As shown in Figure 29, medial lining portion 286 of asymmetric interior layer 280 may extend a first distance D1 from a front end of forefoot region 101 to midfoot region 102 of article 100 on medial side 105, while lateral lining portion 285 of asymmetric interior layer 280 extends a second distance D2 from the front end of forefoot region 101 to midfoot region 102 of article 100 on lateral side 104. In this embodiment, second distance D2 is larger than first distance D1. As shown in the cross-sectional view of Figure 30A, forefoot region 101 of article 100 may include asymmetric interior layer 280 substantially along the entire interior surface 122 of knitted component 130. In contrast, as shown in the cross-sectional view of Figure 30B taken along a portion of article in midfoot region 102, lateral lining portion 285 of asymmetric interior layer 280 is disposed substantially along the entire interior surface 122 on lateral side 104 of knitted component 130 from the top end adjacent to lace 125 to the bottom end adjacent to strobel sock 128 and sockliner 113. However, medial lining portion 286 of asymmetric interior layer 280 is disposed only along a portion of interior surface 122 of knitted component 130 on medial side 105 the top end adjacent to lace 125 to a portion along medial side 105 where medial extending portion 294 of connecting layer 282 is shown.

With this configuration, providing asymmetric interior layer 280 with medial lining portion 286 that extends a shorter distance from the front end of article 100 allows a wearer of article 100 to have more sensitive "feel" of the soccer ball for passing or holding along medial side 105 of upper 120. In addition, providing asymmetric interior layer 280 with lateral lining portion 285 that extends a longer distance from the front end of article 100 on lateral side 104 may provide additional dampening or padding to article 100 to assist with absorbing impacts with a soccer ball or other objects on lateral side 104 of upper 120.

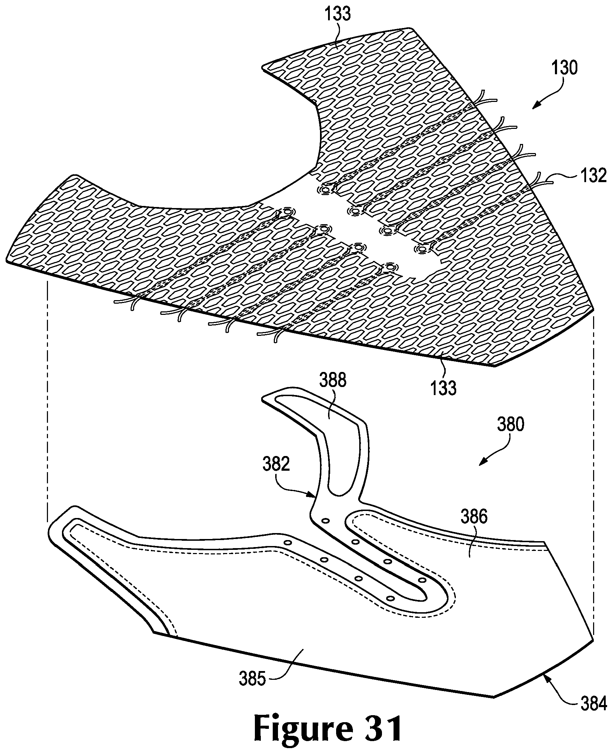

Figures 31 through 35A-35C illustrate a second configuration of an asymmetric interior layer 380. In some embodiments, asymmetric interior layer 380 may be formed by multiple components. In an exemplary embodiment, asymmetric interior layer 380 may include a connecting layer 382 and a lining layer 384. Referring now to Figure 31, second configuration of asymmetric interior layer 380 includes connecting layer 382 and one or more portions of lining layer 384 arranged together to form interior layer 380. Connecting layer 382 may be formed from a substantially similar material as connecting layer 282, described above, to bond with or adhere to portions of interior surface 122 of knitted component 130 and/or lining layer 384. In this case, connecting layer 382 incorporating a thermoplastic polymer material may be used to join (a) connecting layer 382 to interior surface 122 of knitted component 130, and/or (b) lining layer 384 to interior surface 122 of knitted component 130.

Lining layer 384 may formed from a textile, such as a mesh textile material or a microfiber textile material, that is adhered or bonded to knitted component 130. In an exemplary embodiment, lining layer 384 may be selected from any suitable textile material that is configured to provide padding and/or cushioning along portions of interior surface 122 of upper 120. In some embodiments, lining layer 384 may be adhesively attached to interior surface 122 of knitted component 130. In addition, connecting layer 382 incorporating a thermoplastic polymer material may overlap with one or more portions of lining layer 384 to assist with attaching lining layer 384 to knitted component 130.

In some embodiments, lining layer 384 may include one or more separate components. For example, as shown in Figures 31 through 33, lining layer 384 may include a lateral lining portion 385 and a medial lining portion 386 disposed, respectively, on lateral side 104 and medial side 105 of lining layer 384. In contrast to first configuration of asymmetric interior layer 280, second configuration of asymmetric interior layer 380 extends for a greater distance along lateral side 104. In this embodiment, lateral lining portion 385 extends through forefoot region 101, midfoot region 102, and to at least a portion of heel region 103 on lateral side 104 and medial lining portion 386 extends through forefoot region 101 and at least a portion of midfoot region 102 on medial side 105. In an exemplary embodiment, lateral lining portion 385 and medial lining portion 386 extend substantially continuously between lateral side 104 and medial side 105 and across forefoot region 101 of knitted component 130. With this configuration, lateral lining portion 385 and medial lining portion 386 may be substantially continuous with each other so as to form a substantial majority of lining layer 384. In other embodiments, however, lateral lining portion 385 and medial lining portion 386 may be provided as separate components of lining layer 384.

In addition, in some embodiments, lining layer 384 may further include portions that are associated with a collar in heel region 103 that forms the opening for receiving a foot within upper 120. In this embodiment, lateral lining portion 385 extends to an area of lining layer 384 that is associated with a collar on lateral side 104. Lining layer 384 also includes a medial collar portion 388 disposed on medial side 105 opposite lateral lining portion 385 in heel region 103 of interior layer 380. Lateral lining portion 385 and medial collar portion 388 may be configured to provide additional padding and/or cushioning along interior surface 122 of the portion of knitted component 130 that forms collar 123, described above. In this embodiment, medial collar portion 388 is provided separately and in a discontinuous manner with medial lining portion 386, while lateral lining portion 385 is substantially continuous along lateral side 104 to the collar of lining layer 384. In one embodiment, medial collar portion 388 is entirely circumscribed and surrounded by a portion of connecting layer 382.

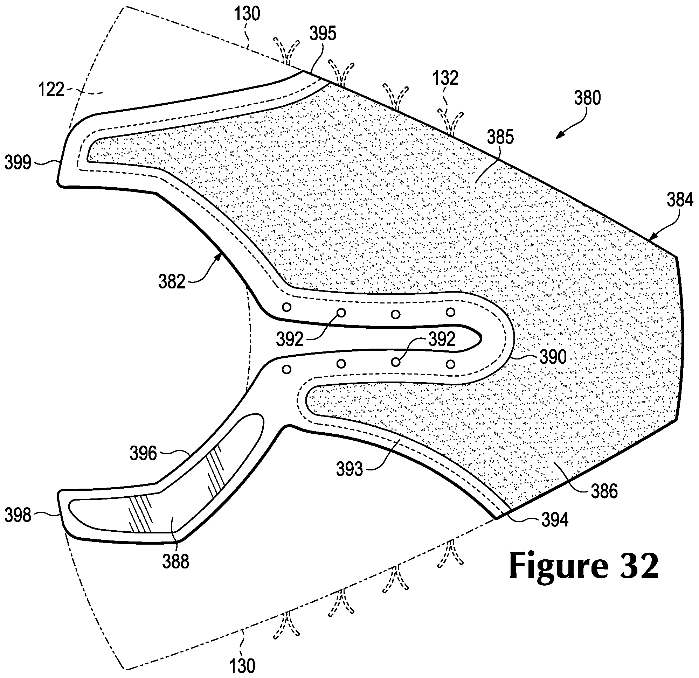

Referring now to Figure 32, second configuration of asymmetric interior layer 380 is illustrated in a top plan view disposed along interior surface 122 of knitted component 130. In an exemplary embodiment, asymmetric interior layer 380 may be disposed a shorter distance along medial side 105 of midfoot region 102 of upper 120 than the distance of asymmetric interior layer 380 along lateral side 104 of upper 120. In this embodiment, lateral lining portion 385 and medial lining portion 386 have different sizes and shapes to provide asymmetric interior layer 380 with an asymmetric arrangement. As shown in Figure 32, lateral lining portion 385 is larger, and extends to a further distance in heel region 103 of knitted component 130, than medial lining portion 386, which only extends to midfoot region 102.

Connecting layer 382 may include multiple components configured to outline and/or partially overlap with portions of lining layer 384 so as to facilitate attachment of lining layer 384 with interior surface 122 of knitted component 130. In this embodiment, connecting layer 382 includes a throat portion 390. Throat portion 390 is centrally located approximately within the middle of asymmetric interior layer 380 and primarily in midfoot region 102. In some embodiments, throat portion 390 may correspond with an instep region or upper surface of a foot. When asymmetric interior layer 380 is combined with knitted component 130 to form upper 120, throat portion 390 of connecting layer 382 may correspond with throat area 124 of upper 120. In an exemplary embodiment, throat portion 390 may divide and separate lateral lining portion 385 and medial lining portion 386 on either side of throat portion 390.

In some embodiments, throat portion 390 of connecting layer 382 may include a plurality of lace apertures 392. Plurality of lace apertures 392 may be disposed along and adjacent to a perimeter edge of throat portion 390, as shown in Figure 32. In some embodiments, plurality of lace apertures 392 correspond with lace-receiving elements 126 on knitted component 130. Lace apertures 392 may provide additional reinforcement and/or support to lace-receiving elements 126.

Connecting layer 382 may include portions extending from throat portion 390 in different directions towards edges of asymmetric interior layer 380. For example, connecting layer 382 may include portions that extend in a lateral direction toward each of lateral side 104 and medial side 105. In this embodiment, connecting layer 382 includes a medial extending portion 394 that extends from throat portion 390 in a direction towards medial side 105. Medial extending portion 394 may further extend in a forwards direction towards forefoot region 101 so as to outline a perimeter of medial lining portion 386. Connecting layer 382 also includes a lateral extending portion 395 that extends from throat portion 390 in a rearwards direction towards heel region 103 and then extends back towards lateral side 104 in a forwards direction. Lateral extending portion 395 is disposed opposite of medial extending portion 394. Lateral extending portion 395 may extends towards lateral side 104 following along and outlining a perimeter of lateral lining portion 385.

Connecting layer may also include portions that extend rearwards in a longitudinal direction toward heel region 103. In this embodiment, connecting layer 382 includes a medial collar portion 396 that extends from throat portion 390 to a medial edge 398. As described above, lateral extending portion 395 of connecting layer 382 extends between throat portion 390 to a lateral edge 399 before extending forwards towards lateral side 104. When asymmetric interior layer 380 is combined with knitted component 130, medial edge 398 of connecting layer 382 corresponds with an outer perimeter of knitted component 130 on medial side 105 of heel region 103, and lateral edge 399 of connecting layer 382 corresponds with the outer perimeter of knitted component 130 on lateral side 104 of heel region 103. In an exemplary embodiment, medial collar portion 398 may surround and circumscribe medial collar portion 388 of lining layer 384.

In an exemplary embodiment, connecting layer 382 may further include an overlapping region 393. Overlapping region 393 is substantially similar to overlapping region 293, described above. In this embodiment, overlapping region 393 extends along medial extending portion 394 overlapping a portion of medial lining portion 386, through throat portion 390 overlapping portions of medial lining portion 386 and lateral lining portion 385, and along lateral extending portion 395 overlapping a portion of lateral lining portion 385. Additionally, overlapping region 393 may further extend through throat portion 390 overlapping portions of medial lining portion 386 and lateral lining portion 385.

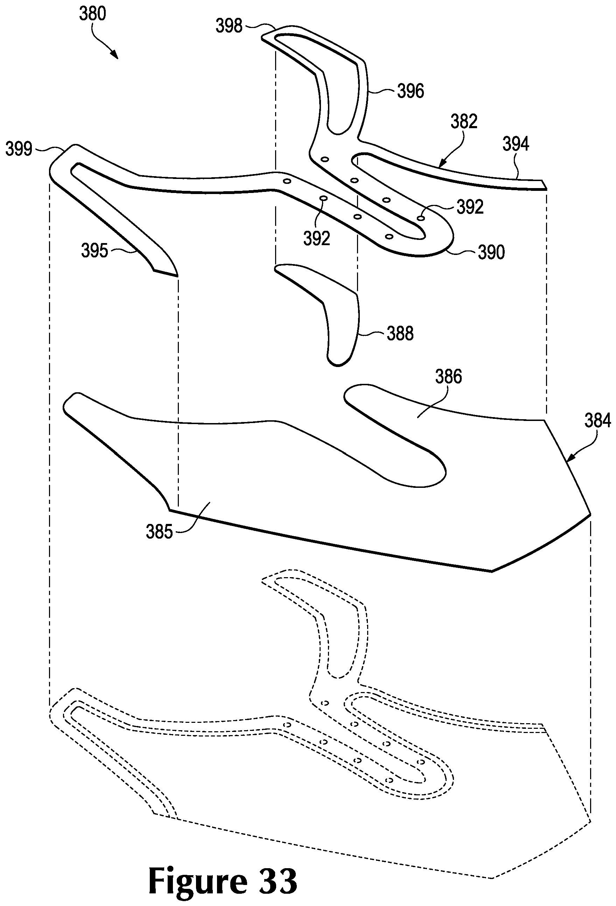

Figure 33 illustrates an exploded view of the components forming an exemplary embodiment of second configuration of asymmetric interior layer 380, described above. As shown in Figure 33, asymmetric interior layer 380 includes connecting layer 382 and lining layer 384. Connecting layer 382 includes throat portion 390 (including plurality of apertures 392), medial extending portion 394, lateral extending portion 395, and medial collar portion 396. Lining layer 384 includes lateral lining portion 385, medial lining portion 386, and medial collar portion 388. As described previously, connecting layer 382 may be formed of a polymer material that is configured to attach portions of lining layer 384 with connecting layer 382 to form asymmetric interior layer 380, and/or to assist with attaching portions of asymmetric interior layer 380 to interior surface 122 of knitted component 130.

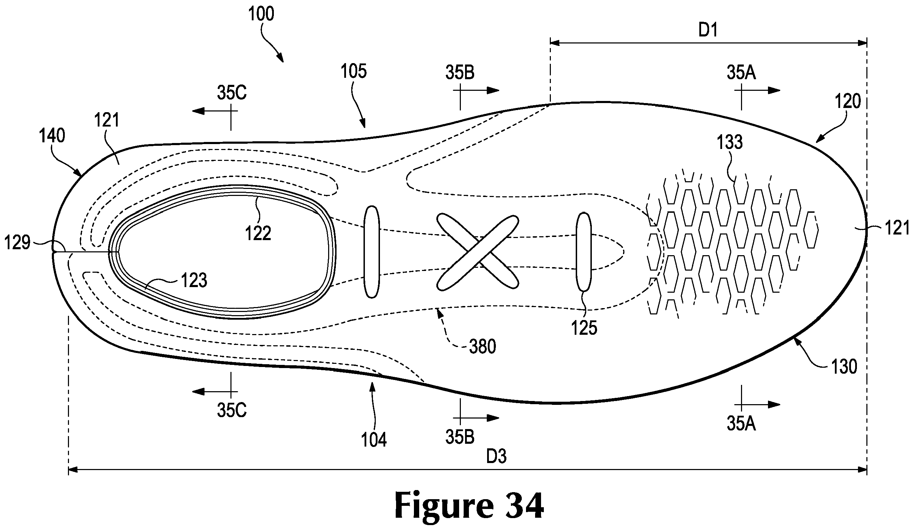

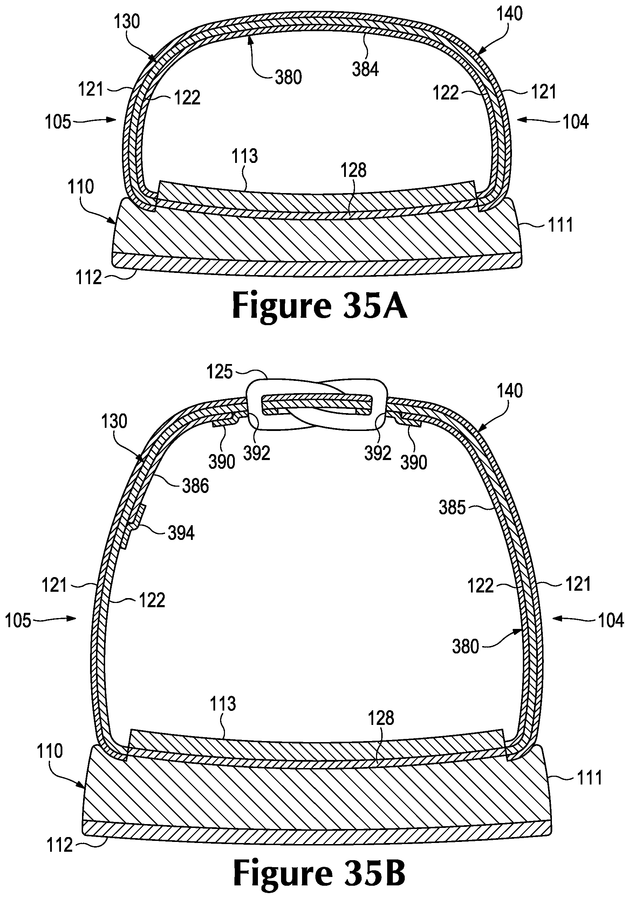

Referring now to Figures 34 and 35A-35B, second configuration of asymmetric interior layer 380 has been combined with knitted component 130 to form upper 120 of an exemplary embodiment of article 100. Article 100 includes the components of an article of footwear described above, including lace 125, skin layer 140, and plurality of protruding areas 133. In this embodiment, the asymmetric configuration of asymmetric interior layer 380 may be seen with reference to the difference between the portions of lining layer 384 disposed on each of lateral side 104 and medial side 105.

As shown in Figure 34, medial lining portion 386 of asymmetric interior layer 380 may extend first distance D1 from a front end of forefoot region 101 to midfoot region 102 of article 100 on medial side 105, similar to medial lining portion 286, described above. In contrast, to asymmetric interior layer 280, however, lateral lining portion 385 of asymmetric interior layer 380 extends a third distance D3 from the front end of forefoot region 101 extending through midfoot region 102 to heel region 103 of article 100 on lateral side 104. In this embodiment, third distance D3 is larger than first distance D1. In addition, third distance D3 is also larger than second distance D2 of lateral lining portion 285, described above.

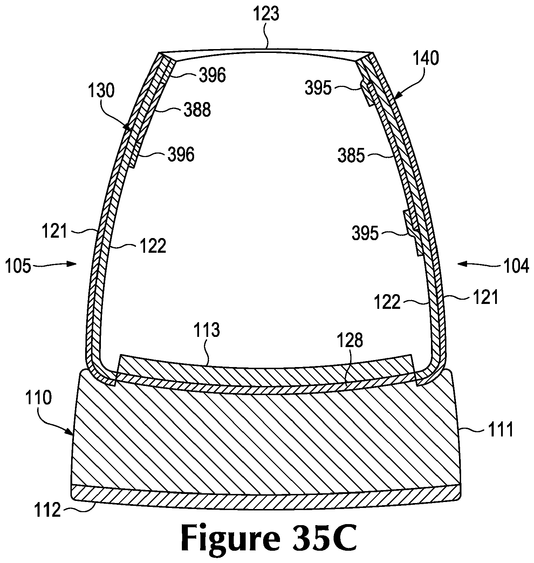

As shown in the cross-sectional view of Figure 35A, forefoot region 101 of article 100 may include asymmetric interior layer 380 substantially along the entire interior surface 122 of knitted component 130. In contrast, as shown in the cross-sectional view of Figure 35B taken along a portion of article 100 in midfoot region 102, lateral lining portion 385 of asymmetric interior layer 380 is disposed substantially along the entire interior surface 122 on lateral side 104 of knitted component 130 from the top end adjacent to lace 125 to the bottom end adjacent to strobel sock 128 and sockliner 113. However, medial lining portion 386 of asymmetric interior layer 380 is disposed only along a portion of interior surface 122 of knitted component 130 on medial side 105 the top end adjacent to lace 125 to a portion along medial side 105 where medial extending portion 394 of connecting layer 382 is shown. Additionally, as shown in the cross-sectional view of Figure 35C taken along a portion of article 100 in heel region 103, lateral lining portion 385 of asymmetric interior layer 380 is disposed along a portion of the interior surface 122 on lateral side 104 of knitted component 130 from the top end adjacent to lace 125 to approximately the middle of lateral side 104 where lateral extending portion 395 is shown. In addition, in heel region 103, medial collar portion 388 of asymmetric interior layer 380 is disposed only along a portion of interior surface 122 of knitted component 130 on medial side 105 proximate to the top end of upper 120 adjacent to collar 123.

With this configuration, providing asymmetric interior layer 380 with medial lining portion 386 that extends a shorter distance from the front end of article 100 allows a wearer of article 100 to have more sensitive "feel" of the soccer ball for passing or holding along medial side 105 of upper 120. In addition, providing asymmetric interior layer 380 with lateral lining portion 385 that extends a longer distance from the front end of article 100 on lateral side 104 may provide additional dampening or padding to article 100 to assist with absorbing impacts with a soccer ball or other objects on lateral side 104 of upper 120. In addition, in comparison with first configuration of asymmetric interior layer 280, second configuration of asymmetric interior layer 380 extends over heel region 103 on lateral side 104 of upper 120 so as to add additional dampening or padding to a heel of a wearer.

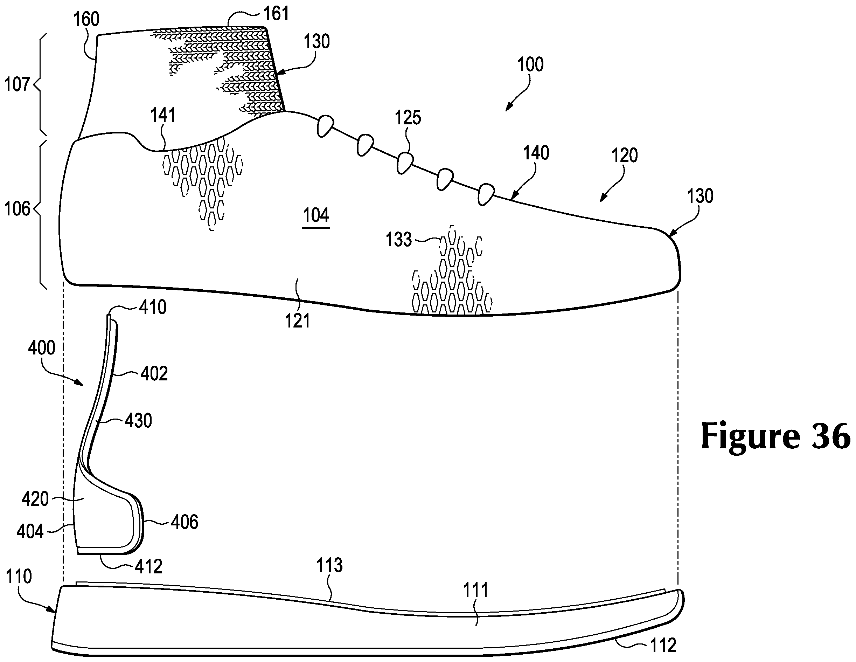

In some embodiments, an interior layer of a knitted component may include additional interior features that are configured to assist with providing comfort and/or cushioning to a foot of a wearer. In an exemplary embodiment, an interior layer of a knitted component may be located in heel region 103 to assist with providing comfort and/or cushioning to a heel of a foot of a wearer. Figures 36 through 43 illustrate various embodiments of a heel pad that may be provided as an interior layer in a heel region of an article of footwear.

Referring now to Figures 36 through 39, an exemplary embodiment of a heel pad 400 that may be provided as an interior layer in heel region 103 of knitted component 130 is illustrated. In some cases, heel pad 400 may be provided separately from other embodiments of an interior layer, described above, including interior layer 180, first configuration of asymmetric interior layer 280, and/or second configuration of asymmetric interior layer 380. In other cases, heel pad 400 may be combined and provided together with any of the embodiments of an interior layer described herein.

In some embodiments, heel pad 400 may be disposed along interior surface 122 of knitted component 130 in heel region 103 and extend upwards along interior surface 122 from a location proximate or adjacent to sockliner 113 and/or strobel sock 128 to a top end of collar 123 surrounding the opening of knitted component 130. With this configuration, heel pad 400 may provide comfort and/or cushioning to a heel of a foot of a wearer when disposed within upper 120.

In embodiments where knitted component 130 includes an ankle cuff, for example, ankle cuff 160 as shown in Figures 12 through 15, heel pad 400 may extend along interior surface 122 from a location proximate or adjacent to the sockliner 113 and/or strobel sock 128 to a top of the ankle cuff surrounding the opening of knitted component 130. With this configuration, heel pad 400 may provide comfort and/or cushioning to a heel, as well as above the heel extending along an Achilles tendon of a foot of a wearer when disposed within upper 120.

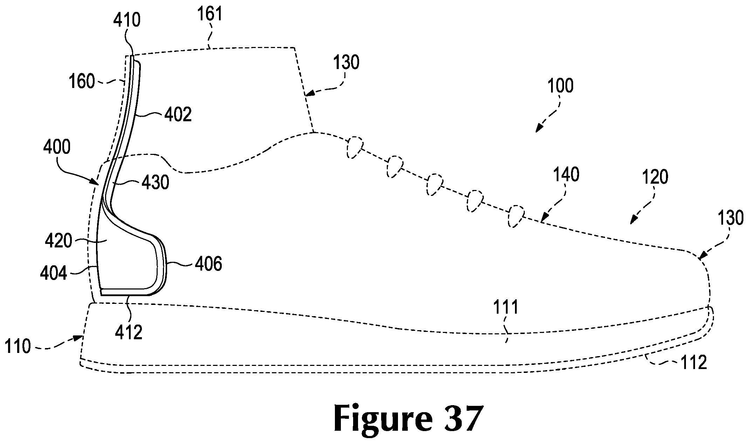

Referring now to Figures 36 and 37, heel pad 400 may be incorporated into article 100 that includes knitted component 130 having ankle cuff 160 for covering at least a portion of an ankle of the wearer. In addition to covering the foot, therefore, upper 120 extends upward and covers a portion of the ankle. For reference purposes, upper 120 may be divided into two general regions: foot region 106 and ankle region 107. Foot region 106 extends through each of forefoot region 101, midfoot region 102, and heel region 103 and generally encompasses portions of upper 120 corresponding with the foot. In many configurations of article of footwear 100, foot region 106 corresponds with portions of upper 120 that are intended to be below the lateral malleolus and the medial malleolus (i.e., the bony prominences on each side of the ankle) of the wearer. Ankle region 107 is primarily located in heel region 103 and generally encompasses portions of upper 120 corresponding with the ankle. In many configurations of footwear 100, ankle region 107 corresponds with portions of upper 120 that are intended to cover and extend above the lateral malleolus and the medial malleolus.

As shown in Figures 36 through 39, a knitted component similar to the embodiment of knitted component 130 illustrated in Figure 9B, wherein protruding areas 133 are present throughout knitted component 130, may be used with heel pad 400. Additionally, this embodiment of knitted component 130 includes ankle cuff 160, as described above.

In some embodiments, heel pad 400 may comprise one or more portions disposed along different areas of upper 120. In one embodiment, heel pad 400 includes a body portion 404 and an ascending portion 402. Body portion 404 may be configured to extend around a heel of a wearer at a portion of knitted component 130 in heel region 103 of foot region 106. Ascending portion 402 may be configured to extend along above the heel of the wearer and at least partially cover an Achilles tendon at a portion of knitted component 130 in heel region 103 of ankle region 107. In an exemplary embodiment, body portion 404 and ascending portion 402 may have shapes that correspond with the portions of a heel of a wearer that each portion is configured to cover. For example, body portion 404 may be wider than ascending portion 402 so as to correspond with and cover a larger portion of a heel of a wearer. Similarly, ascending portion 402 may be narrower than body portion 404 so as to correspond with and cover the Achilles tendon of a heel of wearer as heel pad 400 extends upwards along interior surface 122.

In this embodiment, body portion 404 may extend between lateral side 104 and medial side 105 of knitted component 130 from a lateral edge 406 to a medial edge (not shown). Heel pad 400 may further extend from a bottom edge 412 of body portion 404 that is disposed adjacent to sockliner 113 and/or strobel sock 128 to a top edge 410 of ascending portion 402 that is disposed adjacent to opening 161 of ankle cuff 160. With this configuration, heel pad 400 may be configured to provide padding and/or cushioning to a heel and/or an Achilles tendon of a foot of a wearer of article 100.

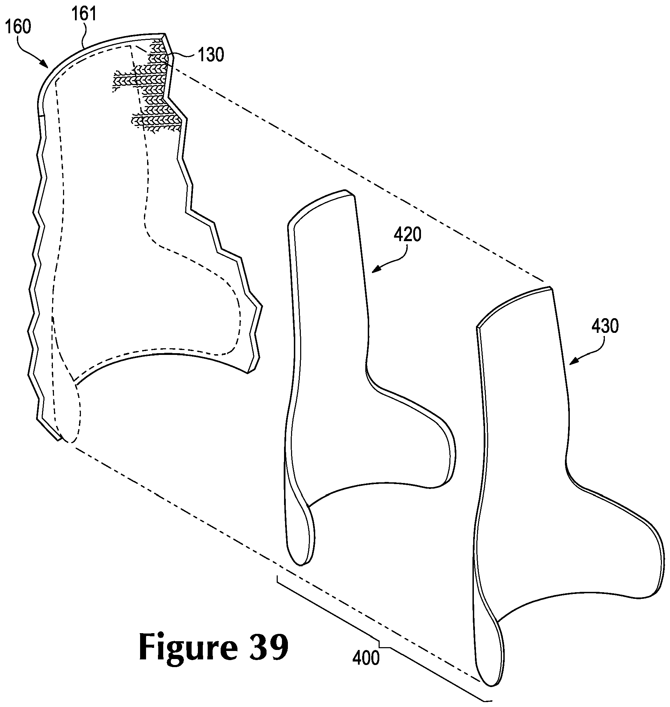

In some embodiments, heel pad 400 may comprises multiple components, including include one or more layers that form heel pad 400 with a laminated structure. In an exemplary embodiment, heel pad 400 may include a padding layer 420 and a covering layer 430. As shown in Figure 39, padding layer 420 may be disposed directly along interior surface 122 and covering layer 430 may be disposed over padding layer 420. In some embodiments, covering layer 430 may be larger than and extend over the entire perimeter of padding layer 420 so as to cover and envelop padding layer 420. Edges along the perimeter of covering layer 430 may be disposed directly along interior surface 122 of knitted component 130 while the remaining portion of covering layer 430 is disposed against padding layer 420. Padding layer 420 may be formed from a polymer foam material that attenuates impact forces or any other material configured to provide padding or cushioning to a foot. Covering layer 430 may be formed from any suitable material for an interior layer, including a textile, such as a microfiber textile, or a polymer layer material with many of the properties of skin layer 140, described above.

As shown in Figure 37, heel pad 400 may extend along interior surface 122 of knitted component 130 within the interior of upper 120. In an exemplary embodiment, one or more of padding layer 420 and covering layer 430 may be attached using adhesive or otherwise bonded to interior surface 122 of knitted component 130, including ankle cuff 160. In this embodiment, body portion 404 is attached to interior surface 122 of knitted component 130 in foot region 106 of upper 120 from bottom edge 412 and continuing upwards towards opening 161 in ankle region 107 where ascending portion 402 is attached to interior surface 122 of ankle cuff 160 of knitted component 130 at top edge 410 adjacent to opening 161.

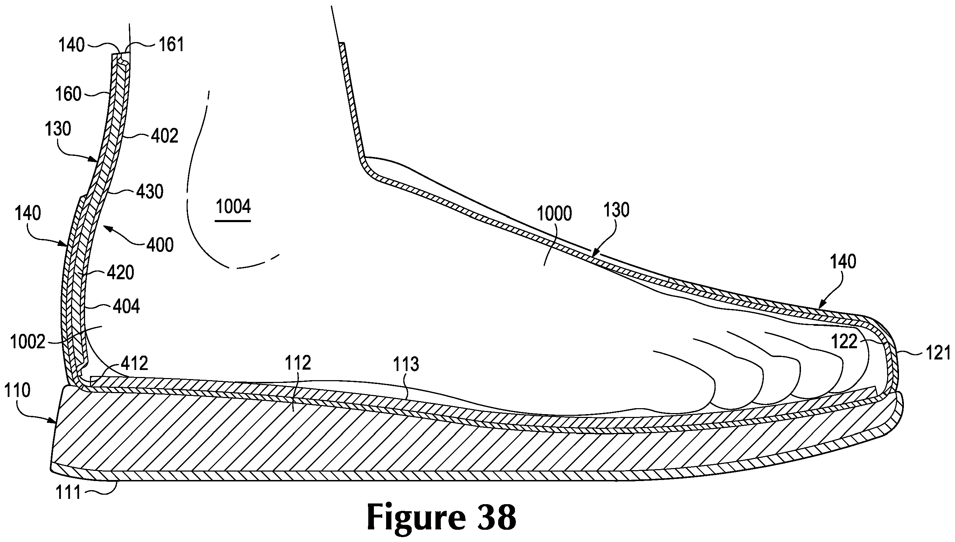

As shown in Figure 38, heel pad 400 may closely correspond with and conform to a shape of a heel 1002 of a foot 1000 of a wearer. In this embodiment, heel pad 400 extends from bottom edge 412 adjacent to sockliner 113 at heel region 103, upwards along interior surface 122 of knitted component 130, and further extending all the way up to top end 410 adjacent to opening 161 on ankle cuff 160. At opening 161 of ankle cuff 160, top edge 410 of ascending portion 402 of heel pad 400 is disposed at a location disposed more forward in the direction of forefoot region 101 than bottom edge 412 of body portion 404 of heel pad 400 disposed at a location adjacent to sockliner 113 at the bottom of interior surface 122 of knitted component 130 at heel region 103. Because of the flexibility of ankle cuff 160 of knitted component 130, ascending portion 402 of heel pad 400 may follow along the curvature of heel 1002 and extend above an ankle 1004 of foot 1000 at top edge 410 so as to follow along the Achilles tendon of foot 1000 to closely correspond with and conform to the shape of heel 1002.

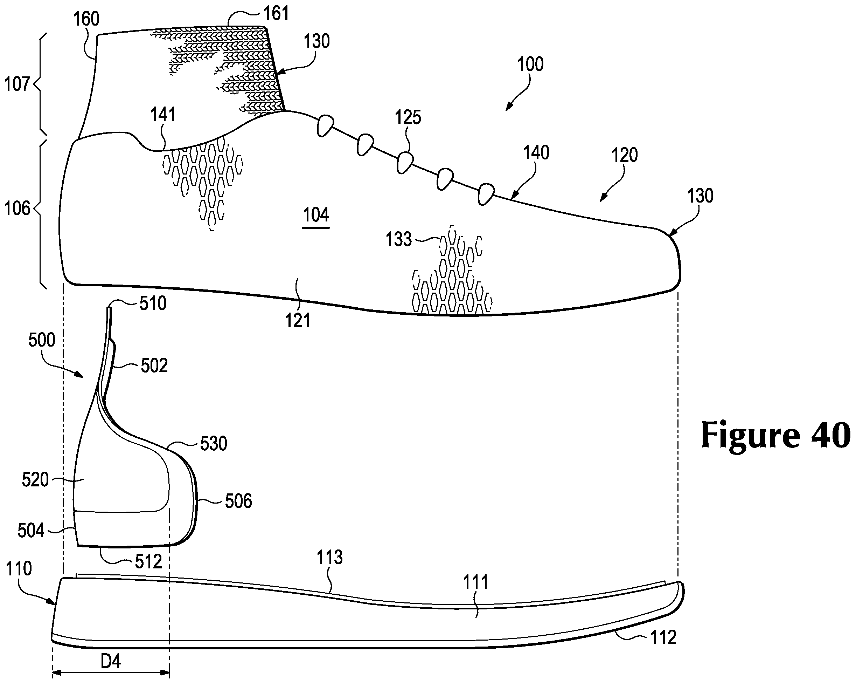

Referring now to Figures 40 through 43, an alternate embodiment of a heel pad 500 that may be provided as an interior layer in heel region 103 of knitted component 130 is illustrated. In some embodiments, heel pad 500 may be provided in selected portions of heel region 103 to provide padding to a desired area of a foot of a wearer. In some cases, heel pad 500 may be provided separately from other embodiments of an interior layer, described above, including interior layer 180, first configuration of asymmetric interior layer 280, and/or second configuration of asymmetric interior layer 380. In other cases, heel pad 500 may be combined and provided together with any of the embodiments of an interior layer described herein. Compared with heel pad 400, described above, heel pad 500 may be configured with a different size and/or shape so as to provide padding and/or cushioning to a desired area of a foot of a wearer. For example, in one embodiment, heel pad 500 may be selected to provide padding and/or cushioning to portions of heel region 103 of knitted component 130 that correspond to and surround an ankle of a foot of a wearer.

In some embodiments, heel pad 500 may be disposed along interior surface 122 of knitted component 130 in heel region 103 and extend upwards along interior surface 122 from a location proximate or adjacent to sockliner 113 and/or strobel sock 128 to a top end of collar 123 surrounding the opening of knitted component 130. With this configuration, heel pad 500 may provide comfort and/or cushioning to an ankle of a foot of a wearer when disposed within upper 120.

In embodiments where knitted component 130 includes an ankle cuff, for example, ankle cuff 160 as shown in Figures 12 through 15, heel pad 500 may extend along interior surface 122 from a location proximate or adjacent to the sockliner 113 and/or strobel sock 128 to a top of the ankle cuff surrounding the opening of knitted component 130. With this configuration, heel pad 500 may provide comfort and/or cushioning to a heel, as well as above the heel extending along an Achilles tendon and around an ankle of a foot of a wearer, when disposed within upper 120.

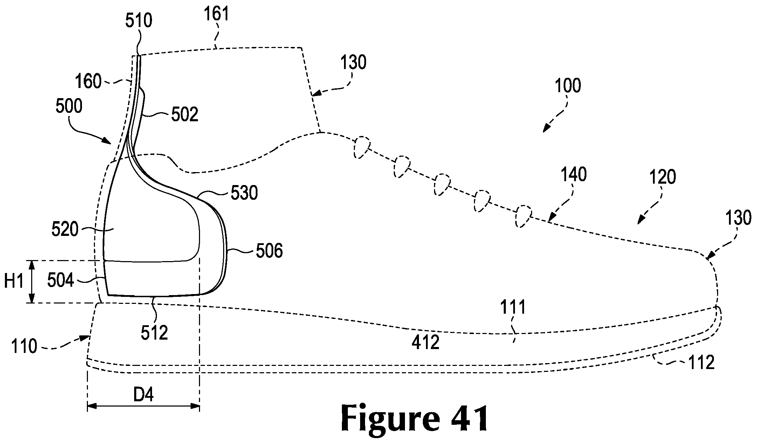

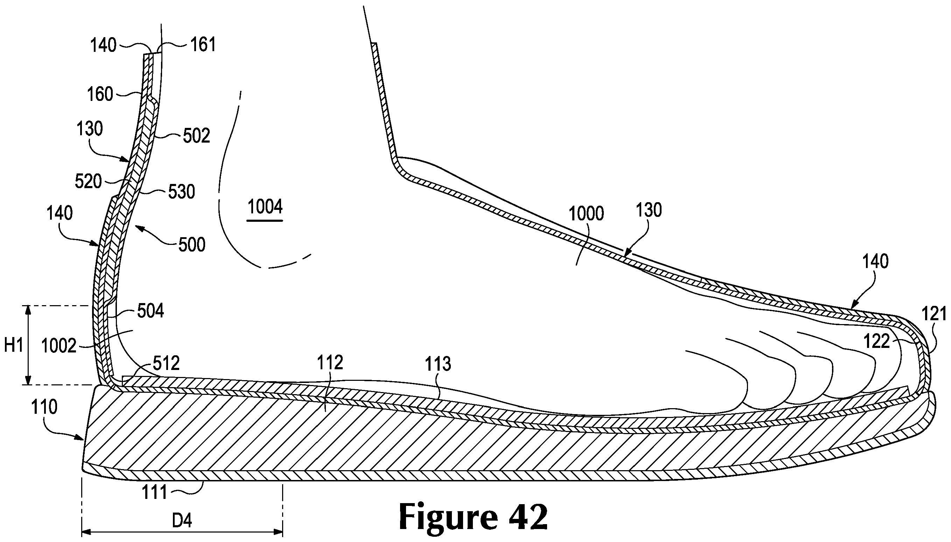

Referring now to Figures 41 and 42, heel pad 500 may be incorporated into article 100 that includes knitted component 130 having ankle cuff 160 for covering at least a portion of an ankle of the wearer, as described above. As shown in Figures 40 through 43, a knitted component similar to the embodiment of knitted component 130 illustrated in Figure 9B, wherein protruding areas 133 are present throughout knitted component 130, may be used with heel pad 500. Additionally, this embodiment of knitted component 130 includes ankle cuff 160, as described above.

In some embodiments, heel pad 500 may comprise one or more portions disposed along different areas of upper 120. In one embodiment, heel pad 500 includes a body portion 504 and an ascending portion 502. Body portion 504 may be configured to extend around a heel and an ankle of a wearer at a portion of knitted component 130 in heel region 103 of foot region 106. Ascending portion 502 may be configured to extend along above the heel of the wearer and at least partially cover an Achilles tendon at a portion of knitted component 130 in heel region 103 of ankle region 107. In an exemplary embodiment, body portion 504 and ascending portion 502 may have shapes that correspond with the portions of a heel and/or ankle of a wearer that each portion is configured to cover. For example, body portion 504 may be wider than ascending portion 502 so as to correspond with and cover a larger portion of a heel and/or ankle of a wearer. Similarly, ascending portion 502 may be narrower than body portion 504 so as to correspond with and cover the Achilles tendon of a heel of wearer as heel pad 500 extends upwards along interior surface 122.

In this embodiment, body portion 504 may extend between lateral side 104 and medial side 105 of knitted component 130 from lateral edge 506 to a medial edge (not shown). Heel pad 500 may further extend from a bottom edge 512 of body portion 504 that is disposed adjacent to sockliner 113 and/or strobel sock 128 to a top edge 510 of ascending portion 502 that is disposed adjacent to opening 161 of ankle cuff 160. With this configuration, heel pad 500 may be configured to provide padding and/or cushioning to a heel, an ankle, and/or an Achilles tendon of a foot of a wearer of article 100.

Additionally, compared with heel pad 400, heel pad 500 may generally have a larger body portion 504 than body portion 404 of heel pad 400. In an exemplary embodiment, body portion 504 of heel pad 500 may be configured to correspond to and surround an ankle of a foot of a wearer. For example, in this embodiment, lateral edge 506 and the medial edge of body portion 504 may extend from the rear of heel region 103 a fourth distance D4 in a longitudinal direction towards the forefoot region 101. Fourth distance D4 may be configured to correspond with the approximate location of an ankle of a foot of a wearer when disposed within upper 120. With this configuration, body portion 504 may wrap around and surround an ankle of a foot of a wearer on lateral side 104 and medial side 105 and around the backside portion of the ankle that includes the Achilles tendon.

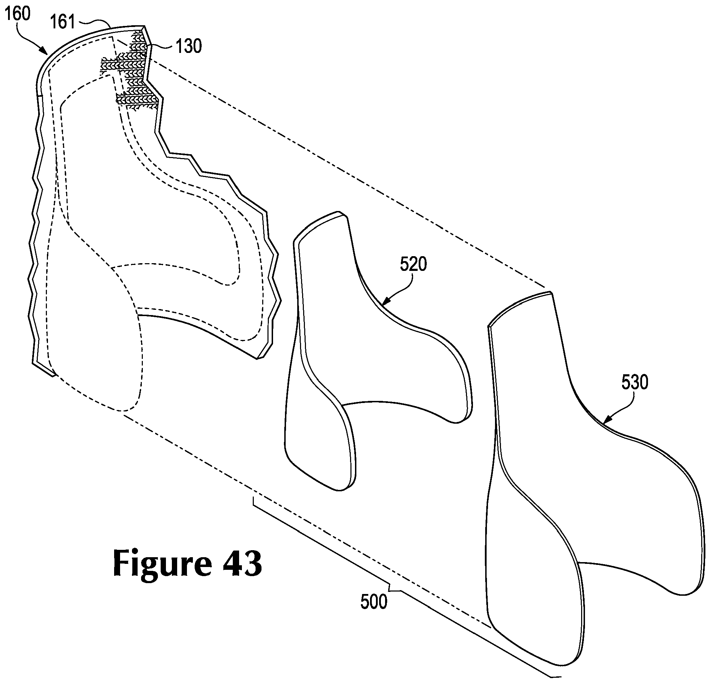

In some embodiments, heel pad 500 may comprises multiple components, including include one or more layers that form heel pad 500 with a laminated structure. In an exemplary embodiment, heel pad 500 may include a padding layer 520 and a covering layer 530. As shown in Figure 43, padding layer 520 may be disposed directly along interior surface 122 and covering layer 530 may be disposed over padding layer 520. In some embodiments, covering layer 530 may be larger than and extend over the entire perimeter of padding layer 520 so as to cover and envelop padding layer 520. Edges along the perimeter of covering layer 530 may be disposed directly along interior surface 122 of knitted component 130 while the remaining portion of covering layer 530 is disposed against padding layer 520. Padding layer 520 may be formed from a polymer foam material that attenuates impact forces or any other material configured to provide padding or cushioning to a foot. Covering layer 530 may be formed from any suitable material for an interior layer, including a textile, such as a microfiber textile, or a polymer layer material with many of the properties of skin layer 140, described above.

As shown in Figure 41, heel pad 500 may extend along interior surface 122 of knitted component 130 within the interior of upper 120. In an exemplary embodiment, one or more of padding layer 520 and covering layer 530 may be attached using adhesive or otherwise bonded to interior surface 122 of knitted component 130, including ankle cuff 160. In this embodiment, body portion 504 is attached to interior surface 122 of knitted component 130 in foot region 106 of upper 120 from bottom edge 512 and continuing upwards towards opening 161 in ankle region 107 where ascending portion 502 is attached to interior surface 122 of ankle cuff 160 of knitted component 130 at top edge 510 adjacent to opening 161.

As shown in Figure 42, heel pad 500 may closely correspond with and conform to a shape of portions of heel 1002 of foot 1000 of a wearer. In this embodiment, heel pad 500 extends from bottom edge 512 adjacent to sockliner 113 at heel region 103, upwards along interior surface 122 of knitted component 130, and further extending all the way up to top end 510 adjacent to opening 161 on ankle cuff 160. At opening 161 of ankle cuff 160, top edge 510 of ascending portion 502 of heel pad 500 is disposed at a location disposed more forward in the direction of forefoot region 101 than bottom edge 512 of body portion 504 of heel pad 500 disposed at a location adjacent to sockliner 113 at the bottom of interior surface 122 of knitted component 130 at heel region 103. Because of the flexibility of ankle cuff 160 of knitted component 130, ascending portion 502 of heel pad 500 may follow along the curvature of heel 1002 and extend above ankle 1004 of foot 1000 at top edge 510 so as to follow along the Achilles tendon of foot 1000 to closely correspond with and conform to the shape of heel 1002.

In some embodiments, padding layer 520 may be included along selected portions of heel pad 500 to provide desired areas of foot 1000 with additional padding and/or cushioning. For example, as shown in Figure 42, padding layer 520 may extend through only a portion of body portion 504 and ascending portion 502. In this embodiment, padding layer 520 is disposed at a selected portion of heel pad 500 located at a first height H1 above the bottom of upper 120 attached to sole structure 110 at the rear of heel region 103. In addition, padding layer 520 may terminate at a location spaced apart from top edge 510. With this configuration, padding layer 520 may be configured to provide additional padding and/or cushioning along the portion of the backside of foot 1000 above heel 1002 that corresponds approximately to the Achilles tendon of foot 1000. In some cases, foot 1000 may have a hollow or other depression in the area extending above heel 1002 approximately aligned with ankle 1004. In this embodiment, heel pad 500 is provided with padding layer 520 approximately at first height H1 as shown in Figure 42 so as to correspond with and assist with providing additional padding and/or cushioning to this hollow or depression in foot 1000 and to assist with alleviating undesirable pressure and/or friction to this portion of foot 1000.

## Claims

1. An article of footwear (100) having an upper (120) extending through a forefoot region (101), a midfoot region (102), and a heel region (103), the upper comprising:
a knitted component (130) having an exterior surface (121) extending away from the upper (120) and an interior surface (122) surrounding a void within the upper for receiving a foot of a wearer;
wherein the exterior surface (121) extends away from the inside of the article of footwear (100),
**characterized in that**:
the interior surface (122) comprises an exposed interior surface portion that is adapted to be adjacent to the foot of the wearer; and
**in that** the upper further comprises:
an asymmetric interior layer (280) attached to the interior surface (122) of the knitted component (130), the asymmetric interior layer including: (1) a medial portion extending a first distance (D1) from the forefoot region (101) to a portion of the midfoot region (102) on a medial side (105) of the upper (120), and (2) a lateral portion extending a second distance (D2) from the forefoot region (101) to a portion of the midfoot region (102) on a lateral side (104) of the upper; and wherein the second distance is larger than the first distance.

2. The article of footwear (100) recited in claim 1, wherein the medial portion of the asymmetric interior layer (280) is substantially continuous with the lateral portion of the asymmetric interior layer through the forefoot region (101) of the upper (120).

3. The article of footwear (100) recited in claim 1, wherein the lateral portion of the asymmetric interior layer (280) further extends a third distance (D3) from the forefoot region (101) to a portion of the heel region (103) on the lateral side (104) of the upper (120), wherein the third distance is larger than the first distance (D1) and the second distance (D2).

4. The article of footwear (100) recited in claim 3, wherein the lateral portion of the asymmetric interior layer (280) extends to a collar of the knitted component (130) on the lateral side (104) of the upper (120).

5. The article of footwear (100) recited in claim 1, wherein the asymmetric interior layer (280) further comprises at least one collar portion (388) disposed adjacent to a collar (123) of the knitted component (130).

6. The article of footwear (100) recited in claim 1, wherein the asymmetric interior layer (280) further comprises a lining layer (284) and a connecting layer (282), the connecting layer being made of a thermoplastic polymer material and the lining layer being made of a textile material.

7. The article of footwear (100) recited in claim 6, wherein the connecting layer (282) includes an overlapping region (293), the overlapping region covering at least a portion of the lining layer (284) along a perimeter of the lining layer; and
wherein the thermoplastic polymer material at least partially infiltrates the lining layer along the overlapping region to join the connecting layer to the lining layer.

8. The article of footwear (100) recited in claim 1, wherein the knitted component (130) further comprises: (a) a foot part for covering at least a portion of the foot of the wearer, and (b) an ankle part for covering at least a portion of an ankle of the wearer, the foot part and the ankle part being formed of unitary knit construction; and
wherein the upper (120) further comprises a heel pad (400) disposed in the heel region (103) that is attached to the interior surface (122) of the knitted component (130) and extends from the foot part of the knitted component to the ankle part of the knitted component.

## Patentansprüche

1. Schuhwerk (100) mit einem Obermaterial (120), das sich durch einen Vorderfußbereich (101), einen Mittelfußbereich (102) und einen Fersenbereich (103) erstreckt, wobei das Obermaterial Folgendes aufweist:
eine Strickkomponente (130) mit einer Außenfläche (121), die sich von dem Obermaterial (120) weg erstreckt, und mit einer Innenfläche (122), die einen Hohlraum im Obermaterial zum Aufnehmen des Fußes eines Trägers umgibt,
wobei sich die Außenfläche (121) von der Innenseite des Schuhwerks (100) weg erstreckt,
**dadurch gekennzeichnet, dass**:
die Innenfläche (122) einen freiliegenden Innenflächenabschnitt aufweist, der an den Fuß des Trägers angrenzen kann; und
das Obermaterial ferner Folgendes aufweist:
eine asymmetrische Innenschicht (280), die an der Innenfläche (122) der Strickkomponente (130) befestigt ist, wobei die asymmetrische Innenschicht Folgendes aufweist: (1) einen medialen Abschnitt, der sich auf einer medialen Seite (105) des Obermaterials (120) über eine erste Strecke (D1) von dem Vorderfußbereich (101) zu einem Abschnitt des Mittelfußbereichs (102) erstreckt, und (2) einen lateralen Abschnitt, der sich auf einer lateralen Seite (104) des Obermaterials über eine zweite Strecke (D2) von dem Vorderfußbereich (101) zu einem Abschnitt des Mittelfußbereichs (102) erstreckt; wobei die zweite Strecke größer ist als die erste Strecke.

2. Schuhwerk (100) nach Anspruch 1, wobei der mediale Abschnitt der asymmetrischen Innenschicht (280) durch den Vorderfußbereich (101) des Obermaterials (120) mit dem lateralen Abschnitt der asymmetrischen Innenschicht im Wesentlichen kontinuierlich ist.

3. Schuhwerk (100) nach Anspruch 1, wobei sich der laterale Abschnitt der asymmetrischen Innenschicht (280) ferner auf der lateralen Seite (104) des Obermaterials (120) über eine dritte Strecke (D3) von dem Vorderfußbereich (101) zu einem Abschnitt des Fersenbereichs (103) erstreckt, wobei die dritte Strecke größer ist als die erste Strecke (D1) und die zweite Strecke (D2).

4. Schuhwerk (100) nach Anspruch 3, wobei sich der laterale Abschnitt der asymmetrischen Innenschicht (280) auf der lateralen Seite (104) des Obermaterials (120) zu einem Kragen der Strickkomponente (130) erstreckt.

5. Schuhwerk (100) nach Anspruch 1, wobei die asymmetrische Innenschicht (280) ferner zumindest einen Kragenabschnitt (388) aufweist, der angrenzend an einen Kragen (123) der Strickkomponente (130) angeordnet ist.

6. Schuhwerk (100) nach Anspruch 1, wobei die asymmetrische Innenschicht (280) ferner eine Verkleidungsschicht (284) und eine Verbindungsschicht (282) aufweist, wobei die Verbindungsschicht aus einem thermoplastischen Polymermaterial und die Verkleidungsschicht aus einem Textilmaterial hergestellt ist.

7. Schuhwerk (100) nach Anspruch 6, wobei die Verbindungsschicht (282) einen Überlappungsbereich (293) aufweist, wobei der Überlappungsbereich entlang eines Umfangs der Verkleidungsschicht zumindest einen Abschnitt der Verkleidungsschicht (284) bedeckt; und
das thermoplastische Polymermaterial entlang des Überlappungsbereichs zumindest teilweise in die Verkleidungsschicht dringt, um die Verbindungsschicht mit der Verkleidungsschicht zu verbinden.

8. Schuhwerk (100) nach Anspruch 1, wobei die Strickkomponente (130) ferner Folgendes aufweist: (a) einen Fußteil zum Bedecken zumindest eines Abschnitts des Fußes des Trägers und (b) einen Knöchelteil zum Bedecken zumindest eines Abschnitts eines Knöchels des Trägers, wobei der Fußteil und der Knöchelteil aus einem einheitlichen Strickaufbau gebildet sind; und
wobei das Obermaterial (120) ferner ein Fersenpolster (400) aufweist, das im Fersenbereich (103) angeordnet ist, an der Innenfläche (122) der Strickkomponente (130) befestigt ist und sich von dem Fußteil der Strickkomponente zum Knöchelteil der Strickkomponente erstreckt.

## Revendications

1. Article chaussant (100) présentant une tige (120) qui s'étend à travers une zone d'avant-pied (101), une zone de métatarse (102) et une zone de talon (103), la tige comprenant :
un composant tricoté (130) qui présente une face extérieure (121) s'étendant en éloignement de la tige (120), et une face intérieure (122) qui entoure une cavité dans la tige pour recevoir le pied d'un porteur,
la face extérieure (121) s'étendant en éloignement de l'intérieur de l'article chaussant (100),
**caractérisé en ce que** :
la face intérieure (122) comporte un tronçon de face intérieure exposé qui est apte à être adjacent au pied du porteur ; et
**en ce que** la tige comporte en outre :
une couche intérieure asymétrique (280) attachée à la face intérieure (122) du composant tricoté (130), la couche intérieure asymétrique présentant: (1) un tronçon médian s'étendant sur une première distance (D1) depuis la zone d'avant-pied (101) vers un tronçon de la zone de métatarse (102) d'un côté médian (105) de la tige (120), et (2) un tronçon latéral qui s'étend sur une deuxième distance (D2) depuis la zone d'avant-pied (101) vers un tronçon de la zone de métatarse (102) d'un côté latéral (104) de la tige ; la deuxième distance étant supérieure à la première distance.

2. Article chaussant (100) selon la revendication 1, le tronçon médian de la couche intérieure asymétrique (280) étant sensiblement continu avec le tronçon latéral de la couche intérieure asymétrique à travers la zone d'avant-pied (101) de la tige (120).

3. Article chaussant (100) selon la revendication 1, le tronçon latéral de la couche intérieure asymétrique (280) s'étendant en outre sur une troisième distance (D3) depuis la zone d'avant-pied (101) vers un tronçon de la zone de talon (103) du côté latéral (104) de la tige (120), la troisième distance étant supérieure à la première distance (D1) et à la deuxième distance (D2).

4. Article chaussant (100) selon la revendication 3, le tronçon latéral de la couche intérieure asymétrique (280) s'étendant vers une collerette du composant tricoté (130) du côté latéral (104) de la tige (120).

5. Article chaussant (100) selon la revendication 1, la couche intérieure asymétrique (280) comprenant en outre au moins un tronçon de collerette (388) qui est agencé adjacent à une collerette (123) du composant tricoté (130).

6. Article chaussant (100) selon la revendication 1, la couche intérieure asymétrique (280) comprenant en outre une couche de revêtement (284) et une couche de raccordement (282), la couche de raccordement étant réalisée en une matière polymère thermoplastique, et la couche de revêtement étant réalisée en une matière textile.

7. Article chaussant (100) selon la revendication 6, la couche de raccordement (282) présentant une zone de chevauchement (293), la zone de chevauchement recouvrant au moins un tronçon de la couche de revêtement (284) le long d'un périmètre de la couche de revêtement ; et
la matière polymère thermoplastique s'infiltrant au moins partiellement dans la couche de revêtement le long de la zone de chevauchement pour relier la couche de raccordement à la couche de revêtement.

8. Article chaussant (100) selon la revendication 1, le composant tricoté (130) comprenant en outre : (a) une partie de pied pour recouvrir au moins un tronçon du pied du porteur, et (b) une partie de cheville pour recouvrir au moins un tronçon d'une cheville du porteur, la partie de pied et la partie de cheville étant formées d'une structure unitaire tricotée ; et
la tige (120) comprenant en outre un coussin de talon (400) qui est agencé dans la zone de talon (103), qui est attaché à la face intérieure (122) du composant tricoté (130) et qui s'étend depuis la partie de pied du composant tricoté à la partie de cheville du composant tricoté.
